(19) Europäisches Patentamt
European Patent Office
Office européen des brevets

(11) EP 0 791 825 B1

(12) EUROPEAN PATENT SPECIFICATION

(45) Date of publication and mention of the grant of the patent:
**15.06.2005 Bulletin 2005/24**

(51) Int Cl.[7]: **G01N 27/407**, G01N 27/419

(21) Application number: **97301197.6**

(22) Date of filing: **24.02.1997**

(54) **Sensing device for measuring nitrogen oxides**

Sensoranordnung zur Bestimmung von Stickstoffoxiden

Dispositif pour mesurer l'oxyde d'azote

(84) Designated Contracting States:
**DE FR GB IT SE**

(30) Priority: **23.02.1996 JP 3675396**
**07.02.1997 JP 2557697**

(43) Date of publication of application:
**27.08.1997 Bulletin 1997/35**

(73) Proprietor: **NGK INSULATORS, LTD.**
**Nagoya-City, Aichi Prefecture 467-0871 (JP)**

(72) Inventors:
- **Kato, Nobuhide**
**Ama-gun, Aichi-pref. 497 (JP)**
- **Nakagaki, Kunihiko**
**Nagoya-city, Aichi-pref. 461 (JP)**

(74) Representative: **Paget, Hugh Charles Edward et al**
**Mewburn Ellis LLP**
**York House**
**23 Kingsway**
**London WC2B 6HP (GB)**

(56) References cited:

| | |
|---|---|
| EP-A- 0 257 842 | EP-A- 0 678 740 |
| EP-A- 0 731 351 | DE-A- 4 439 901 |
| GB-A- 2 288 873 | US-A- 4 927 517 |
| US-A- 5 034 112 | US-A- 5 217 588 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 791 825 B1

## Description

BACKGROUND OF THE INVENTION

Field of the Invention:

The present invention relates to a sensing device for measuring nitrogen oxides contained in, for example, atmospheric air and exhaust gas discharged from vehicles or automobiles. It is herein noted that when the metallic composition is described merely by using %, the description refers to % by weight, unless otherwise specified.

Description of the Related Art:

Exhaust gas, which is discharged, for example, from vehicles or automobiles such as gasoline-fueled automobiles and diesel powered automobiles, contains nitrogen oxides (NOx) such as nitrogen monoxide (NO) and nitrogen dioxide ($NO_2$), as well as carbon monoxide (CO), carbon dioxide ($CO_2$), water ($H_2O$), hydrocarbon (HC), hydrogen ($H_2$), oxygen ($O_2$) and so on. In such exhaust gas, about 80 % of the entire NOx is occupied by NO, and about 95 % of the entire NOx is occupied by NO and $NO_2$.

The three way catalyst, which is used to clean HC, CO, and NOx contained in the exhaust gas, exhibits its maximum cleaning efficiency in the vicinity of the theoretical air fuel ratio (A/F = 14.6). If A/F is controlled to be not less than 16, the amount of produced NOx is decreased. However, the cleaning efficiency of the catalyst is lowered, and consequently the amount of discharged NOx is apt to increase.

Recently, in order to effectively utilize fossil fuel and avoid global warming, the market demand increases, for example, in that the discharge amount of $CO_2$ should be suppressed. In order to respond to such a demand, it becomes more necessary to improve the fuel efficiency. In response to such a demand, for example, the lean burn engine and the catalyst for cleaning NOx are being researched. Especially, the need for a NOx sensor increases.

A conventional NOx analyzer has been hitherto known as an instrument for detecting NOx. The conventional NOx analyzer is operated to measure a characteristic inherent in NOx, based on the use of chemical luminous analysis. However, the conventional NOx analyzer is inconvenient in that the instrument itself is extremely large and expensive. The conventional NOx analyzer requires frequent maintenance because optical parts are used to detect NOx. Further, when the conventional NOx analyzer is used, any sampling operation should be performed for measurement of NOx, where it is impossible to directly insert a detecting element itself into a fluid. Therefore, the conventional NOx analyzer is not suitable for analyzing transient phenomena such as those occur in the exhaust gas discharged from an automobile, in which the condition frequently varies.

In order to dissolve the inconveniences as described above, there has been already suggested a sensor for measuring a desired gas component in exhaust gas by using a substrate comprising an oxygen ion-conductive solid electrolyte.

FIG. 11 shows a system of a gas analyzer disclosed in International Publication WO 95/30146. This apparatus comprises a first chamber 4 into which a measurement gas containing NO is introduced through a narrow hole 2, and a second chamber 8 into which the measurement gas is introduced from the first chamber 4 through a narrow hole 6. Wall surfaces for constructing the first and second chambers 4, 8 are composed of partition walls 10a, 10b made of zirconia ($ZrO_2$) capable of transmitting oxygen ion. A pair of measuring electrodes 12a, 12b and a pair of measuring electrodes 14a, 14b for measuring the partial pressure of oxygen in the respective chambers are arranged on portions of one $ZrO_2$ partition wall 10a corresponding to the first and second chambers 4, 8 respectively. A set of pumping electrodes 16a, 16b and a set of pumping electrodes 18a, 18b for pumping out $O_2$ in the respective chambers to the outside of the chambers are arranged on the other $ZrO_2$ partition wall 10b.

The gas analyzer thus constructed functions as follows. Namely, the partial pressure of oxygen contained in the measurement gas introduced into the first chamber 4 through the narrow hole 2 is detected by a voltmeter 20 as an electric potential difference generated between the measuring electrodes 12a, 12b. A voltage of 100 to 200 mV is applied between the pumping electrodes 16a, 16b by the aid of a power source 22 so that the electric potential difference is adjusted to have a predetermined value. Accordingly, $O_2$ in the first chamber 4 is pumped out to the outside of the apparatus. The amount of pumped out oxygen can be measured by using an ammeter 24.

The measurement gas, from which almost all $O_2$ has been removed, is introduced into the second chamber 8 through the narrow hole 6. In the second chamber 8, an electric potential difference generated between the measuring electrodes 14a, 14b is detected by a voltmeter 26. Thus the partial pressure of oxygen in the second chamber 8 is measured. On the other hand, NO contained in the measurement gas introduced into the second chamber 8 is decomposed as follows by the aid of a voltage applied between the pumping electrodes 18a, 18b by means of a power source 28:

$$NO \rightarrow (1/2)N_2 + (1/2)O_2$$

$O_2$ produced by the decomposition is pumped out to the outside of the second chamber 8 by the aid of the pumping electrodes 18a, 18b. A value of an electric current generated during this process is detected by an ammeter 30. Thus the concentration of NO contained in the measurement gas is measured.

From a certain viewpoint, it is considered to be desirable that Au or an alloy comprising Au of 1 % and the balance of Pt, which has a low NOx-decomposing ability, is used at least for the inner pumping electrode 16b of the oxygen pump based on the use of the electrochemical cell provided for the first chamber 4. However, such an electrode, which is composed of only Au or composed of the alloy comprising Au, is deficient in heat resistance. Therefore, it is feared that when such an electrode is used for a long period of time, its electrode function is lowered due to sintering, and it becomes impossible to sufficiently operate the electrode as an oxygen pump.

EP-A-678740 describes sensing devices for measuring NOx generally similar to that described above in relation to Fig. 11, and mentioning that the electrodes contacted by the gas being measured inside the device may contain Pt and 1% Au.

## SUMMARY OF THE INVENTION

The present invention aims to overcome or to ameliorate the disadvantages involved in the conventional measurement for nitrogen oxides as described above

and aims to provide a sensing device for measuring nitrogen oxides, which makes it possible to measure, for example, the concentration of NOx in a measurement gas in a stable manner for a long period of time in a broad temperature range, without being affected by, for example, oxygen, $CO_2$, and $H_2O$.

According to the present invention a sensing device for measuring nitrogen oxides is provided, as set out in claim 1.

According to the present invention, at first, the oxygen in the measurement gas introduced from the external space is subjected to the pumping process performed by the main pumping means, and the oxygen is adjusted to have a predetermined concentration. The measurement gas, in which the oxygen concentration has been adjusted by the main pumping means, is introduced into the electric signal-generating means in the next step. The electric signal-generating means performs conversion into the electric signal corresponding to an amount of oxygen contained in the measurement gas after being subjected to the pumping process performed by the main pumping means. After that, the nitrogen oxides contained in the measurement gas are measured on the basis of the electric signal supplied from the electric signal-generating conversion means.

Especially, in the present invention, at least the first pumping electrode exposed to the measurement gas introduced from the external space is a porous cermet electrode and contains the alloy comprising Au of not less than 0.01 % and less than 0.8%, the balance being the element of the platinum group. The electrode containing the alloy has an extremely low activity as a nitrogen monoxide-decomposing catalyst, and it does not decompose NO even at a low partial pressure of oxygen. Therefore, the oxygen, which behaves as a disturbing components for the measurement of the nitrogen oxides, can be eliminated to be substantially zero, without exerting any influence on the measurement of the nitrogen oxide. As a result, the nitrogen oxides contained in the measurement gas can be measured highly accurately and stably by the aid of a measuring pumping means and a current-detecting means.

The sensing device may further comprise the measuring pumping means and the current-detecting means to serve as the electric signal-generating means. In this preferred embodiment, the measurement gas, in which the oxygen concentration has been adjusted by the main pumping means, is introduced into the measuring pumping means.

The oxygen in the measurement gas is subjected to a pumping process by the aid of the measuring pumping means on the basis of a measuring voltage applied between a pair of first and second detecting electrodes. A pumping current is generated in the measuring pumping means, corresponding to an amount of oxygen subjected to the pumping process performed by the measuring pumping means. The generated pumping current is detected by the current-detecting means. Thus the nitrogen oxides are measured, corresponding to the amount of oxygen.

As for the measuring pumping means, a pumping voltage sufficient to decompose the nitrogen oxides is applied between the pair of detecting electrodes, and/or the measuring pumping means is arranged with a nitrogen oxide-decomposing catalyst for decomposing the nitrogen oxides. In such an embodiment, oxygen is produced from the nitrogen oxides decomposed by the action of the pumping voltage and/or the action of the nitrogen oxide-decomposing catalyst. The produced oxygen is subjected to the pumping process, and the pumping current thereby generated is detected by the current-detecting means. Thus the nitrogen oxides are measured, corresponding to the amount of oxygen.

In another preferred embodiment, the sensing device of the present invention may further comprise a concentration-detecting means and a voltage-detecting means to serve as the electric signal-generating conversion means. In this embodiment, the measurement gas, in which the concentration of oxygen has been adjusted by the main pumping means, is introduced into the concentration-detecting means in the next step. The concentration-detecting means generates an electromotive force of an oxygen concentration cell, corresponding to a difference between an amount of oxygen contained in the measurement gas after being subjected to the pumping process performed by the main pumping means and an amount of oxygen contained in the gas existing on the side of the second detecting electrode. The generated electromotive force is detected by the voltage-detecting means. Thus the nitrogen oxides are measured, corresponding to the amount of oxygen.

In still another embodiment the concentrating-detecting means is arranged with a nitrogen oxide-decomposing catalyst for decomposing the nitrogen oxides. Accordingly, an electromotive force of an oxygen concentration cell is generated between the pair of detecting electrodes, corresponding to a difference between an amount of oxygen produced from the nitrogen oxides decomposed by the action of the nitrogen oxide-decomposing catalyst and an amount of oxygen contained in the gas existing on the side of the second detecting electrode. The generated electromotive force is detected by the voltage-detecting means. Thus the nitrogen oxides are measured, corresponding to the amount of oxygen.

As mentioned, in the sensing device constructed as described above the electrode containing the alloy has an Au content of not less than 0.01% preferably not less than 0.03 %, and less than 0.8 %.

Namely, when the electrode containing the alloy is composed of a cermet, if the amount of Au is not less than 0.8 %, clogging is apt to occur due to sintering during the firing step for the electrode, and the function to serve as the oxygen pump is lowered. Therefore, the amount of Au is less than 0.8 %.

On the other hand, in order to increase the measurement accuracy for the nitrogen oxides, it is necessary to decrease the offset component which appears in a detected value (a current value or a voltage value) obtained by the measuring pumping means or the concentration-detecting means, as small as possible. However, if Au is added in an amount of not more than 0.01 %, the catalytic activity is not sufficiently lowered. For this reason, the decomposition of NO unfavorably occurs, and it becomes difficult to correctly measure the amount of the nitrogen oxides, in a range of the electromotive force of the oxygen concentration cell necessary to pump out the oxygen co-existing in the measurement gas without causing any decomposition of the nitrogen oxides.

It is possible to use, for example, Pt and Rh as the element belonging to the platinum group, which serves as a major component of the alloy. Especially, an alloy of Pt and Au is preferred from a viewpoint of the low catalytic activity.

The sensing device constructed as described above may further comprise a concentration-detecting means including a pair of first and second measuring electrodes, the first measuring electrode being arranged to be opposed to the first pumping electrode of the main pumping means, for measuring an electromotive force of an oxygen concentration cell generated corresponding to a difference between an amount of oxygen contained in the measurement gas during the pumping process performed by the main pumping means and an amount of oxygen contained in a gas existing on a side of the second measuring electrode; and a main pumping control means for adjusting the control voltage for the main pumping means on the basis of the electromotive force detected by the concentration-measuring means.

Accordingly, the electromotive force is generated in the concentration-measuring means, corresponding to the difference between the amount of oxygen contained in the measurement gas during the pumping process performed by the main pumping means and the amount of oxygen contained in the gas existing on the side of the second measuring electrode. The level of the control voltage applied between the pair of pumping electrodes of the main pumping means is adjusted on the basis of the electromotive force by the aid of the main pumping control means.

The main pumping means performs the pumping process for an amount of the oxygen in the measurement gas introduced from the external space, the amount corresponding to the level of the control voltage. The oxygen concentration in the measurement gas is subjected to feedback control so that the oxygen concentration is at a predetermined level by supplying, to the main pumping means, the control voltage having been subjected to the adjustment for the level as described above.

It is preferable for the sensing device constructed as described above that the first pumping electrode arranged in the area into which the measurement gas is introduced, of the pair of pumping electrodes of the main pumping means, is composed of an inactive material having a low catalytic activity on the nitrogen oxides. In this embodiment, the nitrogen oxide-decomposing action on the first pumping electrode is suppressed more appropriately.

The sensing device constructed as described above may further comprise an auxiliary pumping means including an auxiliary pumping electrode formed in the vicinity of the first detecting electrode, wherein the oxygen contained in the measurement gas after being subjected to the pumping process performed by the main pumping means is subjected to a pumping process on the basis of a voltage applied between the auxiliary pumping electrode and the second detecting electrode.

Accordingly, the measurement gas, which has been firstly subjected to the coarse adjustment so that the predetermined gas component has a predetermined concentration by the aid of the main pumping means, is further subjected to the fine adjustment for the concentration of the predetermined gas component by the aid of the auxiliary pumping means.

In general, when the concentration of the predetermined gas component in the measurement gas in the external space greatly changes (for example, from 0 to 20 %), the concentration distribution of the predetermined gas component in the measurement gas introduced into the main pumping means greatly changes. The amount of the predetermined gas component introduced into the measuring pumping means or the concentration-detecting means also changes.

In such a situation, the oxygen concentration in the measurement gas after being subjected to the pumping process performed by the main pumping means is finely adjusted upon the pumping process performed by the auxiliary pumping means. Significantly, the change in oxygen concentration in the measurement gas introduced into the auxiliary pumping means is greatly reduced as a result of the pumping process performed by the main pumping means, as compared with the change in oxygen concentration in the measurement gas supplied from the external space (the measurement gas introduced into the main pumping means). Accordingly, the concentration of the predetermined gas component can be accurately and constantly controlled in the vicinity of the first detecting electrode of the measuring pumping means or in the vicinity of the first detecting electrode of the concentration-detecting means.

Therefore, the concentration of the predetermined gas component introduced into the measuring pumping means or the concentration-detecting means is scarcely affected by the change in oxygen concentration in the measurement gas (the measurement gas introduced into the main pumping means). As a result, the pumping current value detected by the current-detecting means or the electromotive force detected by the voltage-detecting means is not affected by the change in concentration of the predetermined gas component in the measurement gas. Thus a value is obtained, which accurately corresponds to the amount of the objective component existing in the measurement gas.

In the sensing device for measuring the nitrogen oxides according to the present invention, the second measuring electrode is arranged at a position exposed to a space into which the reference gas is introduced. Thus the oxygen contained in the measurement gas can be compared with the oxygen contained in the reference gas, making it possible to detect the oxides more accurately.

Especially, it is preferable that the second measuring electrode and the second detecting electrode are combined into a common unit. In this embodiment, a common electrode, which serves as both of the second measuring electrode of the concentration-measuring means and the second detecting electrode of the measuring pumping means or the concentration-detecting means, is exposed to the reference gas-introducing space. The common electrode can be defined as a reference electrode for the respective detecting processes performed by the concentration-measuring means, the measuring pumping means, and the concentration-detecting means. In accordance with this definition, the first measuring electrode of the concentration-measuring means, and the first detecting electrode of the measuring pumping means and the concentration-detecting means can be defined as a measuring electrode and a detecting electrode respectively.

The main pumping means may include inner and outer pumping electrodes formed at the inside and the outside of a first chamber surrounded by substrates composed of solid electrolytes, for introducing the measurement gas thereinto, and the substrate interposed between the both electrodes.

The measuring pumping means may include the detecting electrode formed at the inside of a second chamber surrounded by substrates composed of solid electrolytes, for introducing the measurement gas thereinto after being subjected to the pumping process performed by the main pumping means, a reference electrode formed at the inside of a reference gas-introducing space surrounded by substrates composed of solid electrolytes, for introducing a reference gas thereinto, and the substrate interposed between the detecting electrode and the reference electrode.

The concentration-detecting means may include the detecting electrode formed at the inside of a second chamber surrounded by substrates composed of solid electrolytes, for introducing the measurement gas thereinto after being subjected to the pumping process performed by the main pumping means, a reference electrode formed at the inside of a reference gas-introducing space surrounded by substrates composed of solid electrolytes, for introducing a reference gas thereinto, and the substrate interposed between the detecting electrode and the reference electrode.

The concentration-measuring means may include the measuring electrode formed at the inside of the first chamber surrounded by substrates composed of solid electrolytes, for introducing the measurement gas from the external space thereinto, the reference electrode formed in the reference gas-introducing space surrounded by substrates composed of solid electrolytes, for introducing the reference gas thereinto, and the substrate interposed between the measuring electrode and the reference electrode.

The sensing device constructed as described above may further comprise a first diffusion rate-determining section for giving a predetermined diffusion resistance to the measurement gas, provided at a passage for introducing the measurement gas from the external space into the first chamber, and a second diffusion rate-determining section for giving a predetermined diffusion resistance to the measurement gas, provided at a passage for introducing the measurement gas into the second chamber after being subjected to the pumping process performed by the main pumping means.

The sensing device constructed as described above may further comprise a third diffusion rate-determining section for giving a predetermined diffusion resistance to the measurement gas, provided at a passage for allowing the measurement gas in the second chamber to approach the detecting electrode.

The sensing device constructed as described above may further comprise a heating means for heating the respective substrates for constructing the first and second chambers to predetermined temperatures. Accordingly, the operation for detecting the nitrogen oxides is performed after the first and second chambers are heated by the heating means to the predetermined temperatures. Thus the oxygen is detected with a high degree of accuracy by the aid of the measuring pumping means or the concentration-detecting means.

Preferably, the solid electrolyte is an oxygen ion-conductive solid electrolyte based on the use of a ceramic such as $ZrO_2$. Preferably, a porous material capable of giving a predetermined diffusion resistance to the measurement gas is used for the first or second diffusion rate-determining section in order to provide designed desired states of the measurement gas in the first and second chambers.

Preferably, an Rh cermet is used for the nitrogen oxide-decomposing catalyst for constructing the electrode or the catalyst arranged in the first and second chambers.

The above and other optional features and advantages of the present invention will become more apparent from the following description when taken in conjunction with the accompanying drawings in which embodiments of the present invention are shown by way of illustrative example.

DESCRIPTION OF THE DRAWINGS

FIG. 1 shows a plan view illustrating a sensing device according to a first embodiment.

FIG. 2 shows a cross-sectional view taken along a line A-A in FIG. 1.

FIG. 3 illustrates the principle of measurement of nitrogen oxides, concerning the sensing device according to the first embodiment.

FIG. 4 shows a characteristic of the sensing device according to the first embodiment, illustrating the durability in an exhaust gas discharged from a diesel engine.

FIG. 5 shows characteristics of the sensing device according to the first embodiment, illustrating the relationships between the pumping current in a main pumping cell and the pumping current in a measuring pumping cell, obtained for electrodes having respective compositions.

FIG. 6 shows a cross-sectional view illustrating a modified embodiment of the sensing device according to the first embodiment.

FIG. 7 shows a cross-sectional view illustrating a sensing device according to a second embodiment.

FIG. 8 shows a cross-sectional view illustrating a sensing device according to a third embodiment.

FIG. 9 shows a cross-sectional view illustrating a sensing device according to a fourth embodiment.

FIG. 10 shows a characteristic of the sensing device according to the fourth embodiment, illustrating the change in electromotive force generated in a measuring oxygen partial pressure-detecting cell depending on the change in NO concentration.

FIG. 11 shows a cross-sectional view illustrating a system of a gas analyzer concerning the conventional technique.

DESCRIPTION OF THE EMBODIMENTS

Several embodiments, in which the sensing device for measuring nitrogen oxides according to the present invention is applied to sensing devices for measuring nitrogen oxides such as NO and $NO_2$ contained in, for example, atmospheric air or exhaust gas discharged from vehicles or automobiles, will be explained below with reference to FIGs. 1 to 10.

At first, as shown in FIGs. 1 and 2, a sensing device 50A according to a first embodiment has a lengthy plate-shaped configuration as a whole, comprising, for example, five stacked solid electrolyte layers 52a to 52e composed of ceramics based on the use of oxygen ion-conductive solid electrolytes such as $ZrO_2$. A first layer from the bottom is designated as a substrate layer 52e. Second and fourth layers from the bottom are designated as first and second spacer layers 52d, 52b respectively. Third and fifth layers from the bottom are designated as first and second solid electrolyte layers 52c, 52a respectively.

Specifically, the first spacer layer 52d is stacked on the substrate layer 52e. The first solid electrolyte layer 52c, the second spacer layer 52b, and the second solid electrolyte layer 52a are successively stacked on the first spacer layer 52d.

A first chamber 54 for adjusting the partial pressure of oxygen in a measurement gas, and a second chamber 56 for finely adjusting the partial pressure of oxygen in the measurement gas and measuring oxides, for example, nitrogen oxides (NOx) in the measurement gas are formed and comparted by a lower surface of the second solid electrolyte layer 52a, side surfaces of the second spacer layer 52b, and an upper surface of the first solid electrolyte layer 52c.

A through hole (first diffusion rate-determining section) 58 for communicating the first chamber 54 with an external measurement gas-existing space is provided at a portion of the second solid electrolyte layer 52a corresponding to the first chamber 54.

The second spacer layer 52b is interposed at a front end of the sensing device 50A between the first and second solid electrolyte layers 52c, 52a. A second diffusion rate-determining section 60 is interposed between the first and second chambers 54, 56.

A space for introducing a reference gas, for example, atmospheric air to serve as a reference for oxide measurement (reference gas-introducing space 62) is formed and comparted by the lower surface of the second solid electrolyte layer 52a, side surfaces of the second spacer layers 52b, and the upper surface of the first solid electrolyte layer 52c.

Namely, the sensing device 50A according to the first embodiment has a configuration in which all of the first chamber 54, the second chamber 56, and the reference gas-introducing space 62 are formed at the stacked position of the second spacer layer 52b, and they are arranged on a substantially identical plane.

The first and second diffusion-rate determining sections 58, 60 give predetermined diffusion resistances to the measurement gas to be introduced into the first and second chambers 54, 56 respectively. Each of the first and second diffusion-rate determining sections 54, 56 can be formed as a passage composed of, for example, a porous material, or a small hole having a predetermined cross-sectional area so that the measurement gas may be introduced.

Especially, the second diffusion-rate determining section 60 is arranged and filled with a porous material comprising, for example, $ZrO_2$, and thus the diffusion resistance of the second diffusion-rate determining section 60 is made larger than the diffusion resistance of the first diffusion-rate determining section 58.

An inner pumping electrode 64, which is composed of a porous cermet electrode having a flat and substantially rectangular shape, is formed on an entire surface portion for forming the first chamber 54, of the lower surface of the second solid electrolyte layer 52a. An outer pumping electrode 66 is formed on a portion corresponding to the inner pumping electrode 64, of the upper surface of the second solid electrolyte layer 52a. An electrochemical pumping cell, i.e., a main pumping cell 68 is constructed by the inner pumping electrode 64, the outer pumping electrode 66, and the second solid electrolyte layer 52a interposed between the both electrodes 64, 66.

A desired control voltage (pumping voltage) Vp1 is applied between the inner pumping electrode 64 and the outer pumping electrode 66 of the main pumping cell 68 by the aid of an external variable power source 70 to allow a pumping current Ipl to flow in a positive or negative direction between the outer pumping electrode 66 and the inner pumping electrode 64. Thus the oxygen in the atmosphere in the first chamber 54 can be pumped out to the external space, or the oxygen in the external space can be pumped into the first chamber 54.

A measuring electrode 72, which is composed of a porous cermet electrode having a flat and substantially rectangular shape, is formed on a portion adjacent to the second diffusion rate-determining section 60, of the upper surface of the first solid electrolyte layer 52c for forming the first chamber 54. A reference electrode 74 is formed on a portion exposed to the reference gas-introducing space 62, of the lower surface of the first solid electrolyte layer 52c. An electrochemical sensor cell, i.e., a controlling oxygen partial pressure-detecting cell 76 is constructed by the measuring electrode 72, the reference electrode 74, and the first solid electrolyte layer 52c.

An electromotive force is generated between the measuring electrode 72 and the reference electrode 74 of the controlling oxygen partial pressure-detecting cell 76 on the basis of a difference in oxygen concentration between the atmosphere in the first chamber 54 and the reference gas (atmospheric air) in the reference gas-introducing space 62. The partial pressure of oxygen in the atmosphere in the first chamber 54 can be detected by measuring the generated electromotive force by the aid of a voltmeter 78.

Namely, the voltage V1, which is generated between the reference electrode 74 and the measuring electrode 72, is an electromotive force of the oxygen concentration cell, generated on the basis of a difference between a partial pressure of oxygen in the reference gas introduced into the reference gas-introducing space 62 and a partial pressure of oxygen in the measurement gas in the first chamber 54. The voltage V1 has the following relationship known as the Nernst's equation.

$$V1 = RT/4F \cdot \ln(P1(O_2)/PO(O_2))$$

R: gas constant;
T: absolute temperature;
F: Faraday constant;
$P1(O_2)$): partial pressure of oxygen in the first chamber 54;
$P0(O_2)$): partial pressure of oxygen in the reference gas.

Therefore, the partial pressure of oxygen in the first chamber 54 can be detected by measuring the voltage V1 generated on the basis of the Nernst's equation, by the aid of the voltmeter 78.

The detected value of the partial pressure of oxygen is used to control the pumping voltage of the variable power source 70 by the aid of a feedback control system 80. Specifically, the pumping operation performed by the main pumping cell 68 is controlled so that the partial pressure of oxygen in the first chamber 54 has a predetermined value which is sufficiently low to control the partial pressure of oxygen in the second chamber 56 in the next step.

As shown in FIG. 2, the sensing device 50A according to the first embodiment includes a detecting electrode 82 composed of a porous cermet electrode having a flat and substantially rectangular shape. The detecting electrode 82 is formed on a portion separated from the second diffusion rate-determining section 60, of the upper surface of the first solid electrolyte layer 52c for forming the second chamber 56. An electrochemical pumping cell, i.e., a measuring pumping cell 84 is constructed by the detecting electrode 82, the reference electrode 74, and the first solid electrolyte layer 52c.

The detecting electrode 82 can be constructed by appropriately selecting an oxide-decomposing catalyst, for example, an Rh cermet, a material having a low catalytic activity, or a combination of an oxide-decomposing catalyst arranged in the vicinity of a material having a low catalytic activity.

In the first embodiment, the detecting electrode 82 is composed of a porous cermet comprising Rh as a metal capable of reducing NOx as the measurement gas component, and zirconia as a ceramic. Thus the detecting electrode 82 functions as a NOx-reducing catalyst for reducing NOx existing in the atmosphere in the second chamber 56. Moreover, the oxygen in the atmosphere in the second chamber 56 can be pumped out to the reference gas-introducing chamber 62 by applying a constant voltage Vp2 between the detecting electrode 82 and the reference electrode 74 by the aid of a DC power source 86. A pumping current Ip2, which is allowed to flow in accordance with the pumping operation performed by the measuring pumping cell 84, is detected by an ammeter 88.

The sensing device 50A according to the first embodiment includes a heater 90 for generating heat in accordance with electric power supply from the outside. The heater 90 is embedded in a form of being interposed between the first solid electrolyte layer 52c and the substrate layer 52e and surrounded by the first spacer layer 52d on its three sides. The heater 90 is provided in order to increase the conductivity of oxygen ion. A ceramic layer 92 composed of alumina or the like is formed to cover upper and lower surfaces of the heater 90 so that the heater 90 is electrically insulated from the substrate layer 52e and the first solid electrolyte layer 52c.

As shown in FIG. 2, the heater 90 is arranged with deviation toward the second chamber 56 located on the front end side of the sensing device 50A so that the second chamber 56 is heated to a higher temperature as compared with the first chamber 54, in other words, the detecting electrode 82 is heated to a higher temperature as compared with the inner pumping electrode 64 and the measuring electrode 72.

The heater 90 is arranged such that when the temperature of the measurement gas changes, for example, in a range of 300 °C to 850 °C, the inner pumping electrode 64 and the measuring electrode 72 in the first chamber 54 are heated to 400 °C to 900 °C, and the detecting electrode 82 in the second chamber 56 is heated to 700 °C to 900 °C. The object of such an arrangement is that the oxygen ion-conductivity of the solid electrolyte layer is maintained to have a predetermined value, the polarization of the electrode is minimized, and the activity of the catalyst is maintained.

Especially, in the sensing device 50A according to the first embodiment, at least the inner pumping electrode 64, and optionally others of the electrodes of the plurality of electrodes described above (the inner pumping electrode 64, the measuring electrode 72, and the detecting electrode 82) exposed to the atmosphere in the first chamber 54 or the second chamber 56, for example, the inner pumping electrode 64 and the measuring electrode 72 are constructed by using a material having a weak reducing ability or no reducing ability with respect to the NO components in the measurement gas. In this embodiment, such an electrode is preferably composed of, for example, a compound having the perovskite structure such as $La_3CuO_4$, a cermet comprising a ceramic and a metal having a low catalytic activity such as Au, or a cermet comprising a ceramic, a metal of the Pt group, and a metal having a low catalytic activity such as Au.

In particular, in such an electrode, the electrode material contains an alloy comprising Au of not less than 0.01 % and less than 0.8%, and the balance principally composed of an element of the platinum group. More preferably, the alloy contains Au in a content of not less than 0.03 % and less than 0.8 %.

Au and the element of the platinum group may be previously prepared as alloy powder which may be applied by firing as a cermet in a form of a paste. Alternatively, a small amount of Au is allowed to adhere to an electrode comprising only Pt, by means of a method of electroless plating or the like, to form an alloy in accordance with aging at a high temperature, or thermal diffusion during the use.

The sensing device 50A according to the first embodiment is basically constructed as described above. Next, its function and effect will be explained.

Before the measurement of oxides, the sensing device 50A according to the first embodiment is set in a state in which the measurement gas can be introduced into the first chamber 54. Next, an electric power is applied to the heater 90 so that the first and second solid electrolyte layers 52c, 52a for the first chamber 54 of the sensing device 50A are heated to, for example, 400 °C to 900 °C, and the first and second solid electrolyte layers 52c, 52a for the second chamber 56 are heated to, for example, 700 °C to 900 °C. After the sensing device 50A is heated in such a temperature state, the first and second solid electrolyte layers 52c, 52a are activated in a desired state.

Next, the measurement of oxides such as NOx contained in the measurement gas is started by introducing the measurement gas into the sensing device 50A having been set as described above.

The measurement gas is introduced into the first chamber 54 under a predetermined diffusion resistance through the first diffusion rate-determining section 58. The partial pressure of oxygen contained in the measurement gas is controlled to have a predetermined value in accordance with a predetermined pumping voltage Vp1 applied between the outer pumping electrode 66 and the inner pumping electrode 64 by the aid of the variable power source 70. Namely, the partial pressure of oxygen in the first chamber 54 can be measured on the basis of a voltage V1 between the reference electrode 74 and the measuring electrode 72, detected by the voltmeter 78.

The voltage V1 is an electromotive force of the oxygen concentration cell defined by the Nernst's equation described above. The pumping voltage Vp1 applied by the variable power source 70 is controlled by the aid of the feedback control system 80 so that the voltage V1 is, for example, 203 mV (500 °C). Thus the partial pressure of oxygen in the first chamber 54 is controlled to be, for example, $10^{-6}$ atm. The first diffusion rate-determining section 58 functions to limit the amount of oxygen in the measurement gas diffusing and flowing into the measuring space (first chamber 54) so that the pumping current Ip1 flowing through the main pumping cell 68 is suppressed when the pumping voltage Vp1 is applied between the inner pumping electrode 64 and the outer pumping electrode 66 of the main pumping cell 68.

A state of the partial pressure of oxygen is formed in the first chamber 54, in which NO in the atmosphere is not decomposed by the inner pumping electrode 64 and the measuring electrode 72, i.e., a condition of the partial pressure of oxygen is formed in the first chamber 54, under which, for example, the reaction of $NO \rightarrow 1/2N_2 + 1/2O_2$ is not caused, even under an environment brought about by being heated by the external measurement gas, and being heated by the heater 90.

This is because of the following reason. Namely, if NO in the measurement gas (atmosphere) is decomposed into $N_2$ and $O_2$ in the first chamber 54, NOx cannot be measured correctly in the second chamber 56. In this context, it is necessary to form a condition under which NO is not decomposed by any component which participates in decomposition of NO in the first chamber 54 (at least the component of the inner pumping electrode 64 of the main pumping cell 68).

The measurement gas, which has been controlled to have the predetermined partial pressure of oxygen in the first chamber 54, is introduced into the second chamber 56 through the second diffusion rate-determining section 60 designed to have a diffusion resistance larger than that of the first diffusion rate-determining section 58.

A predetermined pumping voltage Vp2, for example, 449 mV (700 °C), which makes it possible to sufficiently pump out the oxygen in the second chamber 56, is applied between the reference electrode 74 and the detecting electrode 82 in the second chamber 56 by the aid of the power source 84. Owing to the pumping voltage Vp2, NOx contained in the measurement gas, such as NO and $NO_2$, is decomposed by the detecting electrode 82 which serves as an oxide-decomposing catalyst comprising the Rh cermet, or NOx is decomposed by the catalyst existing separately from the detecting electrode 82. The oxygen thus produced is pumped out toward the reference gas-introducing space 62 through the first solid electrolyte layer 52c. In this process, a value of the current Ip2, which is generated by movement of oxygen ion, is measured by the ammeter 88. The concentration of predetermined oxides, for example, NOx such as NO and $NO_2$ contained in the measurement gas is determined from the current value Ip2.

Now, the principle of measurement performed by the sensing device 50A according to the first embodiment will be more specifically explained with reference to FIG. 3.

In FIG. 3, the measurement gas is introduced into the first chamber 54 through the first diffusion rate-determining section 58. The partial pressure of oxygen in the first chamber 54 is controlled to have a predetermined value, desirably a low value at which NO is not decomposed, by the aid of the main pumping cell 68.

The atmosphere in the first chamber 54, in which the partial pressure of oxygen has been controlled, is introduced into the second chamber 56 which communicates with the first chamber 54 through the second diffusion rate-determining section 60. NOx is decomposed in the second chamber 56. The oxygen produced during the decomposition is pumped out from the second chamber 56 under a gas diffusion rate-determining condition by using the measuring pumping cell 84. The amount of NOx in the measurement gas is measured on the basis of a value of the current Ip2 flowing through the measuring pumping cell 84.

In this method, the NOx concentration: Cn is determined in accordance with $Cn = K \cdot Ip2 - A$, wherein K represents a sensitivity constant, Ip2 represents a value of the current flowing through the measuring pumping cell, and A represents a constant resulting from a small amount of oxygen remaining in the first chamber 54.

Almost all of the current value Ip2 results from the oxygen produced by the decomposition of the NOx components in the measurement gas. Thus it is possible to accurately measure even a minute amount of NOx in a state in which the influence of the oxygen in the measurement gas is eliminated, as compared with the conventional method. It is sufficient that the outer pumping electrode 66 and the reference electrode 74 are formed in an atmosphere to which the oxygen in the first chamber 54 and the second chamber 56 can be released. For example, the outer pumping electrode 66 and the reference electrode 74 may be formed in an atmosphere of air.

As described above, in the sensing device 50A according to the first embodiment, the inner pumping electrode 64 and the measuring electrode 72 exposed to the atmosphere in the first chamber 54 are constructed by using the electrode containing the alloy comprising Au and the balance principally composed of the element of the platinum group. The electrode containing the alloy has an extremely low activity as a nitrogen monoxide-decomposing catalyst, and it does not decompose NO even under a low partial pressure of oxygen. Accordingly, the oxygen, which behaves as a disturbing component for the measurement of the nitrogen oxides, can be eliminated to be substantially zero, without exerting any influence on the measurement of the nitrogen oxide. This fact results in that the nitrogen oxides contained in the measurement gas can be measured highly accurately and stably by the aid of the measuring pumping cell 84 and the ammeter 88.

Now, the basis, on which the content of Au is not less than 0.03 % and less than 0.8 %, will be explained with reference to FIGs. 4 and 5.

At first, FIG. 4 shows a graph illustrating a relationship between the composition of the Au-Pt alloy electrode and the time required for the impedance of the main pumping cell 68 to become five times an initial value, obtained by operating the sensing device 50A according to the first embodiment at a device temperature of 600 °C in an exhaust gas discharged from a diesel engine. FIG. 4 illustrates the fact that the durability at the high temperature is deficient when the Au content is not less than 1 % at which the alloy electrode is apt to be sintered, resulting in increase in the impedance of the main pumping cell.

When the inner pumping electrode 64 and the measuring electrode 72 are composed of a cermet, it is preferable that the Au content is less than 0.8 % because of the following reason. Namely, if the Au content is not less than 0.8 %, clogging is apt to occur due to sintering during the firing step for the electrode, resulting in decrease in function as an oxygen pump.

Next, FIG. 5 shows relationships between the electromotive force V1 generated in the controlling oxygen partial pressure-detecting cell 76 and the current Ip2 flowing through the measuring pumping cell 84, obtained by measurement for a mixed gas comprising oxygen = 0.3 %, $H_2O$ = 3 %, NO = 5000 ppm, and the balance of nitrogen at a device temperature of 680 °C, by using several electrodes containing respective Au-Pt alloys for the inner pumping electrode 64 and the measuring electrode 72 provided in the first chamber 54 in the sensing device 50A according to the first embodiment.

In order to increase the measurement accuracy for the nitrogen oxides, it is necessary to decrease the offset component (offset current) appearing in the pumping current value Ip2 of the measuring pumping cell 84 as small as possible. In this embodiment, it is intended that the offset current is not more than 1 ppm as calculated as a value of NO. Therefore, it is necessary that the electromotive force V1 of the controlling oxygen partial pressure-detecting cell 76 is set to be not less than about 250 mV. However, as understood from the relationships shown in FIG. 5, if Au is added in an amount of not more than 0.01 %, the catalytic activity is not sufficiently lowered. For this reason, the decomposition of NO occurs in a region of the electromotive force of the oxygen concentration cell (region of the electromotive force V1 ≥ 250 mV) necessary to pump out oxygen co-existing in the measurement gas without causing the decomposition of NOx. As a result, it is difficult to correctly measure the amount of the nitrogen oxides. Therefore, the amount of Au in the Au-Pt alloy is preferably not less than 0.01 %, desirably not less than 0.03 %.

For example, Pt and Rh can be used as the element of the platinum group which is a major component of the alloy. Especially, it is desirable to use an alloy of Pt and Au, from a viewpoint of the low catalytic activity.

Next, a modified embodiment of the sensing device 50A according to the first embodiment will be explained with reference to FIG. 6. Components or parts corresponding to those shown in FIG. 2 are designated by the same reference numerals, duplicate explanation of which will be omitted.

As shown in FIG. 6, the sensing device 50Aa according to this modified embodiment has approximately the same structure as that of the sensing device 50A according to the first embodiment (see FIG. 2). However, the former is different from the latter in the following points. Namely, the sensing device 50Aa comprises, as a whole, six stacked solid electrolyte layers 52a to 52f composed of ceramics based on the use of oxygen ion-conductive solid electrolytes such as $ZrO_2$. First and second layers from the bottom are designated as first and second substrate layers 52f, 52e respectively. Third and fifth layers from the bottom are designated as first and second spacer layers 52d, 52b respectively. Fourth and sixth layers from the bottom are designated as first and second solid electrolyte layers 52c, 52a respectively.

The sensing device 50Aa according to the modified embodiment includes a reference gas-introducing space 62 which is formed and comparted between the second substrate layer 52b and the first solid electrolyte layer 52c by a lower surface of the first solid electrolyte layer 52c, an upper surface of the second substrate layer 52b, and side surfaces of the first spacer layer 52d.

The second spacer layer 52b is interposed between the first and second solid electrolyte layers 52c, 52a. First and second diffusion rate-determining sections 58, 60 are also interposed between the first and second solid electrolyte layers 52c, 52a.

A first chamber 54 for adjusting the partial pressure of oxygen in a measurement gas is formed and comparted by a lower surface of the second solid electrolyte layer 52a, side surfaces of the first and second diffusion rate-determining sections 58, 60, and an upper surface of the first solid electrolyte layer 52c. A second chamber 56 for finely adjusting the partial pressure of oxygen in the measurement gas and measuring oxides, for example, nitrogen oxides (NOx) in the measurement gas is formed and comparted by a lower surface of the second solid electrolyte layer 52a, a side surface of the second diffusion rate-determining section 60, a side surface of the second spacer layer 52b, and an upper surface of the first solid electrolyte layer 52c.

The other structure and the principle of measurement of the nitrogen oxides are the same as those of the sensing device 50A according to the first embodiment described above, duplicate explanation of which will be omitted in this modified embodiment.

In the sensing device 50Aa according to the modified embodiment, the inner pumping electrode 64 and the measuring electrode 72 provided at the inside of the first chamber 54 contain the alloy comprising Au of not less than 0.01 % and less than 0.8% and the balance principally composed of the element of the platinum group, in the same manner as the sensing device 50A according to the first embodiment.

Therefore, the oxygen, which behaves as a disturbing component for the measurement of the nitrogen oxides, can be eliminated to be substantially zero, without exerting any influence on the measurement of the nitrogen oxide. As a result, the nitrogen oxides contained in the measurement gas can be measured highly accurately and stably by the aid of the measuring pumping cell 84 and the ammeter 88.

Next, a sensing device 50B according to a second embodiment will be explained with reference to FIG. 7. Components or parts corresponding to those shown in FIG. 6 are designated by the same reference numerals, duplicate explanation of which will be omitted.

As shown in FIG. 7, the sensing device 50B according to the second embodiment has approximately the same structure as that of the sensing device 50Aa according to the modified embodiment described above (see FIG. 6). However, the former is different from the latter in that a measuring oxygen partial pressure-detecting cell 100 is provided in place of the measuring pumping cell 84.

The measuring oxygen partial pressure-detecting cell 100 comprises a detecting electrode 102 formed on a portion for forming the second chamber 56, of the upper surface of the first solid electrolyte layer 52c, the reference electrode 74 formed on the lower surface of the first solid electrolyte layer 52c, and the first solid electrolyte layer 52c.

In this embodiment, an electromotive force (electromotive force of an oxygen concentration cell) V2 is generated between the detecting electrode 102 and the reference electrode 74 of the measuring oxygen partial pressure-detecting cell 100, corresponding to a difference in oxygen concentration between an atmosphere around the detecting electrode 102 and an atmosphere around the reference electrode 74.

Therefore, the partial pressure of oxygen in the atmosphere around the detecting electrode 102, in other words, the partial pressure of oxygen defined by oxygen produced by reduction or decomposition of the measurement gas components (NOx) is detected as a value of the voltage V2 by measuring the electromotive force (voltage) V2 generated between the detecting electrode 102 and the reference electrode 74 by using the voltmeter 104.

The degree of change in electromotive force V2 represents the NOx concentration. Namely, the electromotive force V2, which is outputted from the measuring oxygen partial pressure-detecting cell 100 constructed by the detecting electrode 102, the reference electrode 74, and the first solid electrolyte layer 52c, represents the NOx concentration in the measurement gas.

In the sensing device 50B according to the second embodiment, the inner pumping electrode 64 and the measuring electrode 72 provided at the inside of the first chamber 54 also contain the alloy comprising Au of not less than 0.01 % and less than 0.8% and the balance principally composed of the element of the platinum group, in the same manner as the sensing device 50A according to the first embodiment. Therefore, the oxygen, which acts as a disturbing component for the measurement of the nitrogen oxides, can be eliminated to be substantially zero, without exerting any influence on the measurement of the nitrogen oxide. As a result, the nitrogen oxides contained in the measurement gas can be measured highly accurately and stably by the aid of the measuring oxygen partial pressure-detecting cell and the voltmeter.

Next, a sensing device 50C according to a third embodiment will be explained with reference to FIG. 8. Components or parts corresponding to those shown in FIG. 6 are designated by the same reference numerals, duplicate explanation of which will be omitted.

As shown in FIG. 8, the sensing device 50C according to the third embodiment has approximately the same structure as that of the sensing device 50Aa according to the modified embodiment of the first embodiment. However, the former is different from the latter in that a porous $Al_2O_3$ layer or a porous $ZrO_2$ layer for constructing a third diffusion rate-determining section 110 is formed to cover the detecting electrode 82, and an auxiliary pumping cell 112 is provided.

The auxiliary pumping cell 112 comprises an auxiliary pumping electrode 114 composed of a porous cermet electrode having a flat and substantially rectangular shape and formed on an entire lower surface portion for forming the second chamber 56, of the lower surface of the second solid electrolyte layer 52a, the reference electrode 74, the second solid electrolyte layer 52a, the second spacer layer 52b, and the first solid electrolyte layer 52c.

The auxiliary pumping electrode 114 is constructed by using a material having a weak reducing ability or no reducing ability with respect to the NO components in the measurement gas, in the same manner as the inner pumping electrode 64 of the main pumping cell 68. In this embodiment, the auxiliary pumping electrode 114 contains the alloy comprising Au of not less than 0.01 % and less than 1 % and the balance principally composed of the element of the platinum group, preferably the alloy having a content of Au of not less than 0.03 % and less than 0.8 %.

A desired constant voltage Vp3 is applied between the auxiliary pumping electrode 114 and the reference electrode 74 of the auxiliary pumping cell 112 by the aid of an external power source 116. Thus the oxygen in the atmosphere in the second chamber 56 can be pumped out to the reference gas-introducing space 62.

Accordingly, the partial pressure of oxygen in the atmosphere in the second chamber 56 is in a situation in which the measurement gas components (NOx) are not substantially reduced or decomposed, while giving a low value of the partial pressure of oxygen at which the measurement of the amount of the objective components is not substantially affected. In this embodiment, the change in amount of oxygen introduced into the second chamber 56 is greatly reduced as compared with the change which occurs in the measurement gas, owing to the operation of the main pumping cell 68 in the first chamber 54. Therefore, the partial pressure of oxygen in the second chamber 56 is controlled accurately and constantly.

In the sensing device 50C according to the third embodiment, NOx flows into the measuring pumping cell 84 while being limited by the third diffusion rate-determining section 110. Under this condition, the constant voltage (DC) power source 86 is capable of applying a voltage having a magnitude to give a limiting current for pumping for oxygen produced during decomposition in the measuring pumping cell 84.

Therefore, in the sensing device 50C according to the third embodiment constructed as described above, the measurement gas controlled for the partial pressure of oxygen in the second chamber 56 is introduced into the detecting electrode 82 through the third diffusion rate-determining section 110 under a predetermined diffusion resistance.

When it is intended to control the partial pressure of oxygen in the atmosphere in the first chamber 54 to have a low value of the partial pressure of oxygen which does not substantially affect the measurement of NOx, by operating the main pumping cell 68, in other words, when the pumping voltage Vp1 of the variable power source 70 is adjusted by the aid of the feedback control system 80 so that the voltage V1 detected by the controlling oxygen partial pressure-detecting cell 76 is constant, if the oxygen concentration in the measurement gas greatly changes, for example, in a range of 0 to 20 %, then the respective partial pressures of oxygen in the atmosphere in the second chamber 56 and in the atmosphere in the vicinity of the detecting electrode 82 slightly change in ordinary cases. This phenomenon is caused probably because of the following reason. Namely, when the oxygen concentration in the measurement gas increases, the distribution of the oxygen concentration occurs in the widthwise direction and the thickness direction in the first chamber 54 over the measuring electrode 72. The distribution of the oxygen concentration changes depending on the oxygen concentration in the measurement gas.

However, in the case of the sensing device 50C according to the third embodiment, the auxiliary pumping cell 112 is provided for the second chamber 56 so that the partial pressure of oxygen in its internal atmosphere always has a constant low value of the partial pressure of oxygen. Accordingly, even when the partial pressure of oxygen in the atmosphere introduced from the first chamber 54 to the second chamber 56 changes depending on the oxygen concentration in the measurement gas, the partial pressure of oxygen in the atmosphere in the second chamber 56 can be always made to have a constant low value, owing to the pumping operation performed by the auxiliary pumping cell 112. As a result, the partial pressure of oxygen can be controlled to have a low value at which the measurement of NOx is not substantially affected.

NOx in the measurement gas introduced into the detecting electrode 82 is reduced or decomposed around the detecting electrode 82. Thus, for example, a reaction of NO $1/2N_2 + 1/2O_2$ is allowed to occur. In this process, a predetermined voltage Vp2, for example, 430 mV (700 °C) is applied between the detecting electrode 82 and the reference electrode 74 for constructing the measuring pumping cell 84, in a direction to pump out the oxygen from the second chamber 56 to the reference gas-introducing space 62.

Therefore, the pumping current Ip2 flowing through the measuring pumping cell 84 has a value which is proportional to a sum of the oxygen concentration in the atmosphere introduced into the second chamber 56, i.e., the oxygen concentration in the second chamber 56 and the oxygen concentration produced by reduction or decomposition of NOx by the aid of the detecting electrode 82.

In this embodiment, the oxygen concentration in the atmosphere in the second chamber 56 is controlled to be constant by means of the auxiliary pumping cell 112. Accordingly, the pumping current Ip2 flowing through the measuring pumping cell 84 is proportional to the NOx concentration. The NOx concentration corresponds to the amount of diffusion of NOx limited by the third diffusion rate-determining section 110. Therefore, even when the oxygen concentration in the measurement gas greatly changes, it is possible to accurately measure the NOx concentration, based on the use of the measuring pumping cell 84 by the aid of the ammeter 88.

It is assumed, for example, that the partial pressure of oxygen in the atmosphere in the second chamber 56 controlled by the auxiliary pumping cell 112 is 0.02 ppm, and the concentration of NO as the NOx component in the measurement gas is 100 ppm. The pumping current Ip2 flows in an amount corresponding to a sum (= 50.02 ppm) of an oxygen concentration of 50 ppm produced by reduction or decomposition of NO and the oxygen concentration of 0.02 ppm in the atmosphere in the second chamber 56. Therefore, almost all of the pumping current value Ip2 obtained by operating the measuring pumping cell 84 represents the amount brought about by the reduction or decomposition of NO. Accordingly, the obtained result does not depend on the oxygen concentration in the measurement gas.

Next, a sensing device 50D according to a fourth embodiment will be explained with reference to FIG. 9. Components or parts corresponding to those shown in FIGs. 7 and 8 are designated by the same reference numerals, duplicate explanation of which will be omitted.

As shown in FIG. 9, the sensing device 50D according to the fourth embodiment has approximately the same structure as that of the sensing device 50B according to the second embodiment (see FIG. 7). However, the former is different from the latter in that a porous $Al_2O_3$ layer or a porous $ZrO_2$ layer for constructing a third diffusion rate-determining section 110 is formed to cover the detecting electrode 82 of the measuring oxygen partial pressure-detecting cell 100, and an auxiliary pumping cell 112 is provided, in the same manner as the sensing device 50C according to the third embodiment (see FIG. 8).

Now, the principle of detection performed by the sensing device 50D according to the fourth embodiment will be explained with reference to FIG. 10 illustrating a characteristic of the sensing device 50D.

At first, when the NO concentration in the external space is 0 ppm, the pumping voltage Vp1 of the main pumping cell 68 is controlled so that the partial pressure of oxygen in the first chamber 60 is maintained to be $1.3 \times 10^{-7}$ atm, i.e., to give a value of the electromotive force V1 = about 300 mV.

Next, the set voltage Vp3 applied to the auxiliary pumping cell 112 is set to be 460 mV. The partial pressure of oxygen in the second chamber 62 is controlled to be $6.1 \times 10^{-11}$ atm owing to the operation performed by the auxiliary pumping cell 112. As a result, the electromotive force V2 between the detecting electrode 102 and the reference electrode 74 of the measuring oxygen partial pressure-detecting cell 100 is about 460 mV. In this case, the inflammable gas components are oxidized in the first chamber 60, and the sensitivity to NOx is not affected thereby, because the partial pressure of oxygen in the first chamber 60 is $1.3 \times 10^{-7}$ atm, regardless of the fact that the partial pressure of oxygen in the second chamber 62 is $6.1 \times 10^{-11}$ atm.

If the NO concentration in the external space gradually increases, the reduction or decomposition reaction of NO is caused on the detecting electrode 102, because the detecting electrode 102 also functions as a NOx-reducing catalyst in the same manner as the detecting electrode 82 of the measuring pumping cell 84 described above (see FIG. 6). As a result, the oxygen concentration in the atmosphere around the detecting electrode 102 is increased. Accordingly, the electromotive force V2 generated between the detecting electrode 102 and the reference electrode 74 is gradually decreased. With reference to FIG. 10 illustrating the characteristic of the sensing device 50D, for example, when the NO concentration increases to 300 ppm, 500 ppm, and 1000 ppm, the electromotive force V2 detected by the voltmeter 104 is gradually decreased to 300 mV, 250 mV, and 220 mV respectively.

The degree of the decrease in electromotive force V2 represents the NO concentration. Namely, the electromotive force V2, which is outputted from the measuring oxygen partial pressure-detecting cell 100 constructed by the detecting electrode 102, the reference electrode 74, and the first solid electrolyte layer 52c, represents the NO concentration in the measurement gas.

In this embodiment, the partial pressure of oxygen in the atmosphere in the second chamber 56 is in a situation in which the measurement gas components (NOx) are not substantially reduced or decomposed, while giving a low value of the partial pressure of oxygen at which the measurement of the amount of the objective components is not substantially affected, in the same manner as the sensing device 50C according to the third embodiment. Further, the change in amount of oxygen introduced into the second chamber 56 is greatly reduced as compared with the change which occurs in the measurement gas, owing to the operation of the main pumping cell 68 in the first chamber 54. Therefore, the partial pressure of oxygen in the second chamber 56 is controlled accurately and constantly.

Therefore, even when the oxygen concentration in the measurement gas greatly changes, it is possible to accurately measure the NOx concentration, based on the use of the measuring oxygen partial pressure-detecting cell 100 by the aid of the voltmeter 104.

According to the sensing devices concerning the first to fourth embodiments (including the modified embodiment), it is possible to perform the measurement in a stable manner for a long period of time, while eliminating the influence of co-existing water, carbon dioxide gas, and oxygen. Thus the present invention is extremely useful from the industrial viewpoint.

It is a matter of course that the sensing device for measuring nitrogen oxides according to this invention is not limited to the embodiments described above, which can be constructed in other various forms within the scope of the invention.

## Claims

1. A sensing device for measuring nitrogen oxides, comprising:

   a main pumping means (68) including a pair of first and second pumping electrodes (64, 66), said first pumping electrode (64) being arranged in a first chamber (54) into which a measurement gas is introduced from an external space, for performing a pumping process for oxygen contained in said measurement gas introduced from said external space, on the basis of a control voltage (Vp1) applied between said pair of pumping electrodes (64, 66), so that a partial pressure of oxygen in said measurement gas is controlled to have a predetermined value at which NO is not decomposable, wherein said first and second pumping electrodes (64, 66) are formed respectively on the inside and outside of said first chamber (54) which is bounded by first and second substrates (52a, 52c) composed of solid electrolytes, wherein said measurement gas is introduced into said first chamber, and one of said substrates is interposed between said first and second pumping electrodes (64,66); and

an electric signal-generating means including a pair of first and second detecting electrodes (82 or 102, 74), said first detecting electrode (82 or 102) being arranged in a second chamber (56) into which said measurement gas is introduced after being subjected to said pumping process performed by said main pumping means (68), for providing an electric signal (Ip2 or V2) corresponding to an amount of oxygen contained in said measurement gas after being subjected to said pumping process performed by said main pumping means (68),

wherein said electric signal-generating means comprises said first detecting electrode (82 or 102) formed in the inside of said second chamber (56) which is bounded by said first and second substrates (52a, 52c) wherein said measurement gas is introduced into said second chamber after being subjected to said pumping process performed by said main pumping means (68), and said second detecting electrode (74) comprising a reference electrode formed on the inside of a reference gas space (62),

wherein a reference gas is introduced into said reference gas space,

wherein:

said first pumping electrode (64) is a porous cermet electrode which contains an alloy comprising Au in an amount of not less than 0.01% and less than 0.8%, the balance of the alloy being composed of a platinum group element.

**2.** The sensing device according to claim 1, wherein said electric signal-generating means comprises:

a measuring pumping means (84) including said pair of first and second detecting electrodes (82, 74), for performing a pumping process for said oxygen contained in said measurement gas after being subjected to said pumping process performed by said main pumping means (68) on the basis of a measuring voltage (Vp2) applied between said pair of detecting electrodes (82, 74); and

a current-detecting means (88) for detecting a pumping current (Ip2) generated corresponding to an amount of oxygen resulting from said pumping process performed by said measuring pumping means (84), wherein:

said oxides in said measurement gas are measured on the basis of said pumping current (Ip2) detected by said current-detecting means (88).

**3.** The sensing device according to claim 2, wherein said measuring pumping means (84) performs said pumping process for said oxygen produced by any one of or both of actions of application of a voltage sufficient to decompose said nitrogen oxides between said pair of detecting electrodes (82, 74), and a nitrogen oxide-decomposing catalyst arranged in said measuring pumping means (84), on the basis of said measuring voltage (Vp2) applied between said pair of detecting electrodes (82, 74).

**4.** The sensing device according to claim 3, wherein said nitrogen oxide-decomposing catalyst is an Rh cermet.

**5.** The sensing device according to claim 1, wherein said electric signal-generating means comprises:

a concentration-detecting means (100) including said pair of first and second detecting electrodes (102, 74), for generating an electromotive force (V2) corresponding to a difference between said amount of oxygen contained in said measurement gas after being subjected to said pumping process performed by said main pumping means (68) and an amount of oxygen contained in a gas existing on a side of said second detecting electrode (74); and

a voltage-detecting means (104) for detecting said electromotive force (V2) generated by said concentration-detecting means (100), wherein: said nitrogen oxides in said measurement gas are measured on the basis of said electromotive force (V2) detected by said voltage-detecting means (104).

**6.** The sensing device according to claim 5, wherein said concentration-detecting means (100) generates said electromotive force (V2) of an oxygen concentration cell, corresponding to a difference in partial pressure between oxygen produced by an action of a nitrogen oxide-decomposing catalyst arranged in said concentration-detecting means (100) and said oxygen contained in said gas existing on said side of said second detecting electrode (74).

**7.** The sensing device according to claim 6, wherein said nitrogen oxide-decomposing catalyst is an Rh cermet.

**8.** The sensing device according to any one of claims 1 to 7, further comprising:

a concentration-detecting means (76) including a pair of first and second measuring electrodes (72, 74), said first measuring electrode (72) being arranged in said first chamber to be opposed to said first pumping electrode (64) of said main pumping means (68), for measuring an electromotive force (V1) of an oxygen concentration cell generated corresponding to a difference between an amount of oxygen contained in said measurement gas during said pumping process performed by said main pumping means (68) and an amount of oxygen contained in a gas existing on a side of said second measuring electrode (74); and

a main pumping control means (80) for adjusting said control voltage (Vp1) for said main pumping means (68) on the basis of said electromotive force (V1) detected by said concentration-measuring means (76).

**9.** The sensing device according to claim 8, wherein said first measuring electrode (172) contains an alloy comprising Au in an amount of not less than 0.01% and less than 0.8% and a balance principally composed of a platinum group element.

**10.** The sensing device according to any one of claims 1 to 9, wherein said first pumping electrode (64) arranged in said first chamber, of said pair of pumping electrodes (64, 66) of said main pumping means (68), is composed of an inactive material having a low catalytic activity on said nitrogen oxides.

**11.** The sensing device according to any one of claims 1 to 10, further comprising an auxiliary pumping means (112) including an auxiliary pumping electrode (114) formed in said second chamber in the vicinity of said first detecting electrode (82 or 102), wherein said oxygen contained in said measurement gas after being subjected to said pumping process performed by said main pumping means (68) is subjected to a pumping process on the basis of a voltage (Vp3) applied between said auxiliary pumping electrode (114) and said second detecting electrode (74).

**12.** The sensing device according to claim 11, wherein said auxiliary pumping electrode (114) contains an alloy comprising Au in an amount of not less than 0.01% and less than 0.8% and a balance principally composed of a platinum group element.

**13.** The sensing device according to any one of claims 8 to 12, wherein said second measuring electrode (74) is arranged at a position exposed to a space (62) into which said reference gas is introduced.

**14.** The sensing device according to any one of claims 8 to 13, wherein:

said second measuring electrode (74) is combined into a common unit with said second detecting electrode (74).

**15.** The sensing device according to any one of claims 1 to 14, further comprising:

a first diffusion rate-determining section (58) for giving a predetermined diffusion resistance to said measurement gas, provided at a passage for introducing said measurement gas from said external space into said first chamber (54); and

a second diffusion rate-determining section (60) for giving a predetermined diffusion resistance to said measurement gas, provided at a passage for introducing said measurement gas into said second chamber (56) after being subjected to said pumping process performed by said main pumping means (68).

**16.** The sensing device according to any one of claims 1 to 15, further comprising a third diffusion rate-determining section (110) for giving a predetermined diffusion resistance to said measurement gas, provided at a passage for allowing said measurement gas in said second chamber (56) to approach said detecting electrode (82 or 102).

**17.** The sensing device according to any one of claims 1 to 16, wherein said alloy has an Au content of not less than 0.03% and less than 0.8%.

**Patentansprüche**

**1.** Abfühlvorrichtung zum Messen von Stickoxiden, umfassend:

ein Hauptpumpmittel (68), umfassend ein Paar aus einer ersten und einer zweiten Pumpelektrode (64, 66), wobei die erste Pumpelektrode (64) in einer ersten Kammer (54) angeordnet ist, in die ein Messgas von einem Außenraum eingebracht wird, um den in dem aus dem Außenraum eingebrachten Messgas enthaltenen Sauerstoff auf der Grundlage einer zwischen dem Paar aus Pumpelektroden (64, 66) angelegten Steuerspannung (Vp1) einem Pumpvorgang zu unterziehen, sodass der Sauerstoffpartialdruck im Messgas auf einen vorbestimmten Wert, bei dem NO nicht abbaubar ist, geregelt ist, worin die erste bzw. die zweite Pumpelektrode (64, 66) an der Innenseite bzw. an der Außenseite der ersten Kammer (54) angeordnet sind, welche durch ein erstes und ein zweites Substrat (52a, 52c), bestehend aus Festelektrolyten, begrenzt ist, worin das Messgas in die erste Kammer eingebracht wird und eines der Substrate zwischen der ersten und der zweiten Pumpelektrode (64, 66) angeordnet ist; und

ein Mittel für die Erzeugung eines elektrischen Signals, umfassend ein Paar aus einer ersten und einer zweiten Detektionselektrode (82 oder 102, 74), wobei die erste Detektionselektrode (82 oder 102) in einer zweiten Kammer (56) angeordnet ist, in die das Messgas, nachdem es dem vom Hauptpumpmittel (68) ausgeführten Pumpvorgang unterzogen wurde, eingebracht wird, zur Bereitstellung eines elektrischen Signals (Ip2 oder V2), das der im Messgas enthaltenen Sauerstoffmenge nach dem vom Hauptpumpmittel (68) ausgeführten Pumpvorgang entspricht, worin das Mittel für die Erzeugung eines elektrischen Signals die erste Detektionselektrode (82 oder 102), die an der Innenseite der zweiten Kammer (56) ausgebildet ist, welche durch das erste und das zweite Substrat (52a, 52c) begrenzt ist, worin das Messgas, nachdem es dem vom Hauptpumpmittel (68) ausgeführten Pumpvorgang unterzogen wurde, eingebracht wird, und die zweite Detektionselektrode (74) umfasst, welche eine Referenzelektrode umfasst, die an der Innenseite eines Referenzgasraums (62) angeordnet ist, worin ein Referenzgas in den Referenzgasraum eingebracht wird,

worin:

die erste Pumpelektrode (64) eine poröse Cermetelektrode ist, die eine Legierung umfasst, welche Au in einer Menge von nicht weniger als 0,01 % und weniger als 0,8 % enthält, wobei der Rest der Legierung aus einem Element der Platingruppe besteht.

**2.** Abfühlvorrichtung nach Anspruch 1, worin das Mittel für die Erzeugung eines elektrischen Signals Folgendes umfasst:

ein Messpumpmittel (84), umfassend das Paar aus der ersten und der zweiten Detektionselektrode (82, 74), um den im Messgas, nachdem dieses dem vom Hauptpumpmittel (68) ausgeführten Pumpvorgang unterzogen wurde, enthaltenen Sauerstoff auf der Grundlage einer zwischen dem Paar aus Detektionselektroden (82, 74) angelegten Messspannung (Vp2) einem Pumpvorgang zu unterziehen; und

ein Stromdetektionsmittel (88) zur Detektion eines erzeugten Pumpstroms (Ip2), der der Menge an Sauerstoff entspricht, die sich aus dem vom Messpumpmittel (84) ausgeführten Pumpvorgang ergibt, worin:

die Oxide im Messgas auf der Grundlage des vom Stromdetektionsmittel (88) detektierten Pumpstroms (Ip2) gemessen werden.

**3.** Abfühlvorrichtung nach Anspruch 2, worin das Messpumpmittel (84) den Pumpvorgang für den Sauerstoff, der durch eine oder beide der Wirkungen des Anlegens einer Spannung zwischen dem Paar aus Detektionselektroden (82, 72), die zum Abbau der Stickoxide ausreichend ist, und der eines Stickoxid-abbauenden Katalysators, der im Messpumpmittel (84) angeordnet ist, erzeugt wurde, auf der Grundlage der zwischen dem Paar aus Detektionselektroden (82, 72) angelegten Messspannung (Vp2) ausführt.

**4.** Abfühlvorrichtung nach Anspruch 3, worin der Stickoxid-abbauende Katalysator ein Rh-Cermet ist.

**5.** Abfühlvorrichtung nach Anspruch 1, worin das Mittel für die Erzeugung eines elektrischen Signals Folgendes umfasst:

ein Konzentrationsdetektionsmittel (100), umfassend das Paar aus der ersten und der zweiten Detektionselektrode (102, 74), zur Erzeugung einer elektromotorischen Kraft (V2), die der Differenz zwischen der im Messgas, nachdem dieses dem vom Hauptpumpmittel (68) ausgeführten Pumpvorgang unterzogen wurde, enthaltenen Sauerstoffmenge und einer in einem Gas, das an einer Seite der zweiten Detektionselektrode (74) gegenwärtig ist, enthaltenen Sauerstoffmenge entspricht; und

ein Spannungsdetektionsmittel (104) zum Detektieren der vom Konzentrationsdetektionsmittel (100) erzeugten elektromotorischen Kraft (V2), worin:

die Stickoxide im Messgas auf der Grundlage der vom Spannungsdetektionsmittel (104) detektierten elektromotrischen Kraft (V2) gemessen werden.

**6.** Abfühlvorrichtung nach Anspruch 5, worin das Konzentrationsdetektionsmittel (100) die elektromotrische Kraft (V2) einer Sauerstoffkonzentrationszelle erzeugt, die der Differenz des Partialdrucks zwischen dem durch die Wirkung eines im Konzentrationsdetektionsmittel (100) angeordneten Stickstoffoxid-abbauenden Katalysators erzeugten Sauerstoff und dem im Gas, das an der genannten Seite der zweiten Detektionselektrode (74) gegenwärtig ist, enthaltenen Sauerstoff entspricht.

**7.** Abfühlvorrichtung nach Anspruch 6, worin der Stickoxid-abbauende Katalysator ein Rh-Cermet ist.

**8.** Abfühlvorrichtung nach einem der Ansprüche 1 bis 7, weiters umfassend:

ein Konzentrationsdetektionsmittel (76), umfassend ein Paar aus der ersten und der zweiten Messelektrode (72, 74), wobei die erste Messelektrode (72) so in der ersten Kammer angeordnet ist, dass sie der ersten Pumpelektrode (64) des Hauptpumpmittels (68) gegenüberliegt, zum Messen einer erzeugten elektromotorischen Kraft (V1) einer Sauerstoffkonzentrationszelle, die der Differenz zwischen der im Messgas während des vom Hauptpumpmittel (68) ausgeführten Pumpvorgangs enthaltenen Menge an Sauerstoff und der in einem Gas, das an einer Seite der zweiten Messselektrode (74) gegenwärtig ist, enthaltenen Menge an Sauerstoff entspricht; und

ein Hauptpumpsteuermittel (80) zum Anpassen der Steuerspannung (Vp1) für das Hauptpumpmittel (68) auf der Grundlage der vom Konzentrationsmessmittel (76) detektierten elektromotorischen Kraft (V1).

**9.** Abfühlvorrichtung nach Anspruch 8, worin die erste Messelektrode (172) eine Legierung umfasst, welche Au in einer Menge von nicht weniger als 0,01 % und weniger als 0,8 % enthält und deren Rest in erster Linie aus einem Element der Platingruppe besteht.

**10.** Abfühlvorrichtung nach einem der Ansprüche 1 bis 9, worin die in der ersten Kammer angeordnete erste Pumpelektrode (64) des Paars aus Pumpelektroden (64, 66) des Hauptpumpmittels (68) aus einem inaktiven Material mit geringer katalytischer Wirkung auf die Stickoxide besteht.

**11.** Abfühlvorrichtung nach einem der Ansprüche 1 bis 10, weiters umfassend ein Hilfspumpmittel (112), umfassend eine Hilfspumpelektrode (114), die in der zweiten Kammer in der Nähe der ersten Detektionselektrode (82 oder 102) angeordnet ist, worin der im Messgas, nachdem es dem vom Hauptpumpmittel (68) ausgeführten Pumpvorgang unterzogen wurde, enthaltene Sauerstoff auf der Grundlage einer zwischen der Hilfspumpelektrode (114) und der zweiten Detektionselektrode (74) angelegten Spannung (Vp3) einem Pumpvorgang unterzogen wird.

**12.** Abfühlvorrichtung nach Anspruch 11, worin die Hilfspumpelektrode (114) eine Legierung umfasst, welche Au in einer Menge von nicht weniger als 0,01 % und weniger als 0,8 % enthält und deren Rest in erster Linie aus einem Element der Platingruppe besteht.

**13.** Abfühlvorrichtung nach einem der Ansprüche 8 bis 12, worin die zweite Messelektrode (74) an einer Stelle angeordnet ist, die einem Raum (62) ausgesetzt ist, in den das Referenzgas eingebracht wird.

**14.** Abfühlvorrichtung nach einem der Ansprüche 8 bis 13, worin die zweite Messelektrode (74) mit der zweiten Detektionselektrode (74) zu einer gemeinsamen Einheit kombiniert ist.

**15.** Abfühlvorrichtung nach einem der Ansprüche 1 bis 14, weiters umfassend:

einen ersten Abschnitt zur Bestimmung der Diffusionsrate (58), der an einem Durchlass zur Einbringung des Messgases aus dem Außenraum in die erste Kammer (54) angeordnet ist, um dem Messgas einen vorbestimmten Diffusionswiderstand zu verleihen; und

einen zweiten Abschnitt zur Bestimmung der Diffusionsrate (60), der an einem Durchlass zur Einbringung des Messgases, nachdem es dem vom Hauptpumpmittel (68) ausgeführten Pumpvorgang unterzogen wurde, in die zweite Kammer (56) angeordnet ist, um dem Messgas einen vorbestimmten Diffusionswiderstand zu verleihen.

**16.** Abfühlvorrichtung nach einem der Ansprüche 1 bis 15, weiters umfassend einen dritten Abschnitt zur Bestimmung der Diffusionsrate (110), der an einem Durchlass, der dem Messgas in der zweiten Kammer (56) die Annäherung an die Detektionselektrode (82 oder 102) ermöglicht, angeordnet ist, um dem Messgas einen vorbestimmten Diffusionswiderstand zu verleihen.

**17.** Abfühlvorrichtung nach einem der Ansprüche 1 bis 16, worin die Legierung einen Au-Gehalt von nicht weniger als 0,03 % und weniger als 0,8 % aufweist.

## Revendications

**1.** Dispositif de détection destiné à mesurer des oxydes nitriques, comprenant :

un moyen de pompage principal (68) comprenant une paire de première et seconde électrodes de pompage (64, 66), ladite première électrode de pompage (64) étant agencée dans une première chambre (54) dans laquelle un gaz de mesure est introduit par un espace externe, afin d'effectuer un processus de pompage de l'oxygène contenu dans ledit gaz de mesure introduit par ledit espace externe, sur la base d'une tension de commande (Vp1) appliquée entre ladite paire d'électrodes de pompage (64, 66), de telle sorte qu'une pression partielle de l'oxygène dans ledit gaz de mesure soit contrôlée pour avoir une valeur prédéterminée à laquelle NO n'est pas décomposable, dans lequel lesdites première et seconde électrodes de pompage (64, 66) sont formées respectivement sur l'intérieur et l'extérieur de ladite première chambre (54) qui est délimitée par un premier et un second substrats (52a, 52c) composés d'électrolytes solides, dans lequel ledit gaz de mesure est introduit dans ladite première chambre, et l'un desdits substrats est interposé entre lesdites première et seconde électrodes de pompage (64, 66), et

un moyen de génération de signal électrique comprenant une paire de première et seconde électrodes de détection (82 ou 102, 74), ladite première électrode de détection (82 ou 102) étant agencée dans une seconde chambre (56) dans laquelle ledit gaz de mesure est introduit après avoir été soumis audit processus de pompage effectué par ledit moyen de pompage principal (68), afin de fournir un signal électrique (Ip2 ou V2) correspondant à une quantité d'oxygène contenue dans ledit gaz de mesure après qu'il ait été soumis audit processus de pompage effectué par ledit moyen de pompage principal (68), dans lequel ledit moyen de génération de signal électrique comprend ladite première électrode de détection (82 ou 102) formée à l'intérieur de ladite seconde chambre (56) qui est délimitée par lesdits premier et second substrats (52a, 52c), dans lequel ledit gaz de mesure est introduit dans ladite seconde chambre après avoir été soumis audit processus de pompage effectué par ledit moyen de pompage principal (68), et ladite seconde électrode de détection (74) comprenant une électrode de référence formée sur l'intérieur d'un espace de gaz de référence (62), dans lequel un gaz de référence est introduit dans ledit espace de gaz de référence,

dans lequel :

ladite première électrode de pompage (64) est une électrode en cermet poreux qui contient un alliage comprenant Au dans une quantité non inférieure à 0,01% et inférieure à 0,8%, le reste de l'alliage étant composé d'un élément du groupe platine.

2. Dispositif de détection selon la revendication 1, dans lequel ledit moyen de génération de signal électrique comprend :

un moyen de pompage de mesure (84) comprenant ladite paire de première et seconde électrodes de détection (82, 74), afin d'effectuer un processus de pompage dudit oxygène contenu dans ledit gaz de mesure après qu'il ait été soumis audit processus de pompage effectué par ledit moyen de pompage principal (68) sur la base d'une tension de mesure (Vp2) appliquée entre ladite paire d'électrodes de détection (82, 74) ;

et

un moyen de détection de courant (88) destiné à détecter un courant de pompage (Ip2) généré, correspondant à une quantité d'oxygène résultant dudit processus de pompage effectué par ledit moyen de pompage de mesure (84), dans lequel :

lesdits oxydes dans ledit gaz de mesure sont mesurés sur la base dudit courant de pompage (Ip2) détecté par ledit moyen de détection de courant (88).

3. Dispositif de détection selon la revendication 2, dans lequel ledit moyen de pompage de mesure (84) effectue ledit processus de pompage dudit oxygène produit par n'importe laquelle de ou des deux actions d'application d'une tension suffisante pour décomposer lesdits oxydes nitriques entre ladite paire d'électrodes de détection (82, 74) et un catalyseur de décomposition d'oxyde nitrique agencé dans ledit moyen de pompage de mesure (84), sur la base de ladite tension de mesure (Vp2) appliquée entre ladite paire d'électrodes de détection (82, 74).

4. Dispositif de détection selon la revendication 3, dans lequel ledit catalyseur de décomposition d'oxyde nitrique est un cermet Rh.

5. Dispositif de détection selon la revendication 1, dans lequel ledit moyen de génération de signal électrique comprend :

un moyen de détection de concentration (100) comprenant ladite paire de première et seconde électrodes de détection (102, 74), afin de générer une force électromotrice (V2) correspondant à une différence entre ladite quantité d'oxygène contenue dans ledit gaz de mesure après qu'il ait été soumis audit processus de pompage effectué par ledit moyen de pompage principal (68) et une quantité d'oxygène contenu dans un gaz existant sur un côté de ladite seconde électrode de détection (74) ; et
un moyen de détection de tension (104) destiné à détecter ladite force électromotrice (V2) générée par ledit moyen de détection de concentration (100), dans lequel :
lesdits oxydes nitriques dans ledit gaz de mesure sont mesurés sur la base de ladite force électromotrice (V2) détectée par ledit moyen de détection de tension (104).

**6.** Dispositif de détection selon la revendication 5, dans lequel ledit moyen de détection de concentration (100) génère ladite force électromotrice (V2) d'une cellule de concentration d'oxygène, correspondant à une différence de pression partielle entre l'oxygène produit par une action d'un catalyseur de décomposition d'oxyde nitrique agencé dans ledit moyen de détection de concentration (100) et ledit oxygène contenu dans ledit gaz existant sur ledit côté de ladite seconde électrode de détection (74).

**7.** Dispositif de détection selon la revendication 6, dans lequel ledit catalyseur de décomposition d'oxyde nitrique est un cermet Rh.

**8.** Dispositif de détection selon l'une quelconque des revendications 1 à 7, comprenant en outre :

un moyen de détection de concentration (76) comprenant une paire de première et seconde électrodes de mesure (72, 74), ladite première électrode de mesure (72) étant agencée dans ladite première chambre afin d'être opposée à ladite première électrode de pompage (64) dudit moyen de pompage principal (68), afin de mesurer une force électromotrice (V1) d'une cellule de concentration d'oxygène générée, correspondant à une différence entre une quantité d'oxygène contenu dans ledit gaz de mesure pendant ledit processus de pompage effectué par ledit moyen de pompage principal (68) et une quantité d'oxygène contenu dans un gaz existant sur un côté de ladite seconde électrode de mesure (74) ; et
un moyen de contrôle de pompage principal (80) destiné à ajuster ladite tension de commande (Vp1) dudit moyen de pompage principal (68) sur la base de ladite force électromotrice (V1) détectée par ledit moyen de mesure de concentration (76).

**9.** Dispositif de détection selon la revendication 8, dans lequel ladite première électrode de mesure (172) contient un alliage comprenant Au dans une quantité non inférieure à 0,01% et inférieure à 0,8%, et un reste principalement composé d'un élément du groupe platine.

**10.** Dispositif de détection selon l'une quelconque des revendications 1 à 9, dans lequel ladite première électrode de pompage (64) agencée dans ladite première chambre, de ladite paire d'électrodes de pompage (64, 66) dudit moyen de pompage principal (68), est composée d'un matériau inactif possédant une faible activité catalytique sur lesdits oxydes nitriques.

**11.** Dispositif de détection selon l'une quelconque des revendications 1 à 10, comprenant en outre un moyen de pompage auxiliaire (112) comprenant une électrode de pompage auxiliaire (114) formée dans ladite seconde chambre à proximité de ladite première électrode de détection (82 ou 102), dans lequel ledit oxygène contenu dans ledit gaz de mesure, après qu'il ait été soumis audit processus de pompage effectué par ledit moyen de pompage principal (68), est soumis à un processus de pompage sur la base d'une tension (Vp3) appliquée entre ladite électrode de pompage auxiliaire (114) et ladite seconde électrode de détection (74).

**12.** Dispositif de détection selon la revendication 11, dans lequel ladite électrode de pompage auxiliaire (114) contient un alliage comprenant Au dans une quantité non inférieure à 0,01% et inférieure à 0,8%, et un reste principalement composé d'un élément du groupe platine.

**13.** Dispositif de détection selon l'une quelconque des revendications 8 à 12, dans lequel ladite seconde électrode de mesure (74) est agencée à un emplacement exposé à un espace (62) dans lequel ledit gaz de référence est introduit.

**14.** Dispositif de détection selon l'une quelconque des revendications 8 à 13, dans lequel :

ladite seconde électrode de mesure (74) est combinée en une unité commune avec ladite seconde électrode de détection (74).

**15.** Dispositif de détection selon l'une quelconque des revendications 1 à 14, comprenant en outre :

une première section de détermination de vitesse de diffusion (58) destinée à fournir une résistance à la diffusion prédéterminée audit gaz de mesure, prévue au niveau d'un passage permettant d'introduire ledit gaz de mesure à partir dudit espace externe, dans ladite première chambre (54) ; et
une seconde section de détermination de vitesse de diffusion (60) destinée à fournir une résistance à la diffusion prédéterminée audit gaz de mesure, prévue au niveau d'un passage permettant d'introduire ledit gaz de mesure dans ladite seconde chambre (56) après qu'il ait été soumis audit processus de pompage effectué par ledit moyen de pompage principal (68).

**16.** Dispositif de détection selon l'une quelconque des revendications 1 à 15, comprenant en outre une troisième section de détermination de vitesse de diffusion (110) destinée à fournir une résistance à la diffusion prédéterminée audit gaz de mesure, prévue au niveau d'un passage permettant audit gaz de mesure situé dans ladite seconde chambre (56) de s'approcher de ladite électrode de détection (82 ou 102).

**17.** Dispositif de détection selon l'une quelconque des revendications 1 à 16, dans lequel ledit alliage possède une teneur en Au non inférieure à 0,03% et inférieure à 0,8%.

FIG.1

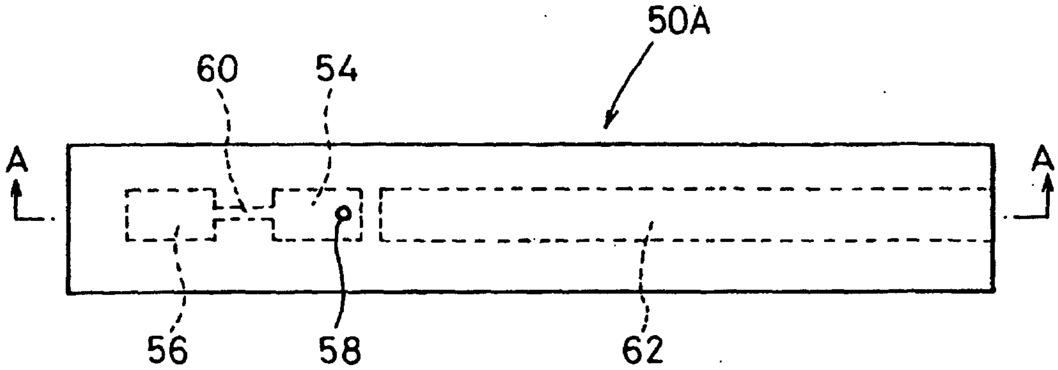
50A
60
54
A
A
56
58
62

FIG.2

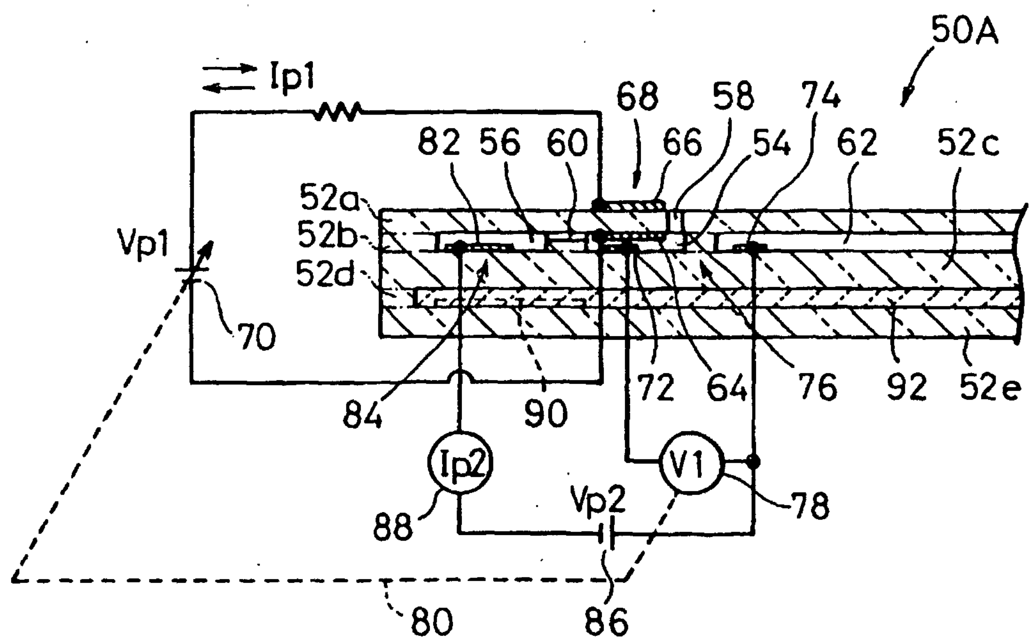
50A
Ip1
68
58
74
82
56
60
66
54
62
52c
52a
52b
Vp1
52d
70
72
64
76
92
52e
84
90
Ip2
V1
78
88
Vp2
80
86

FIG.3

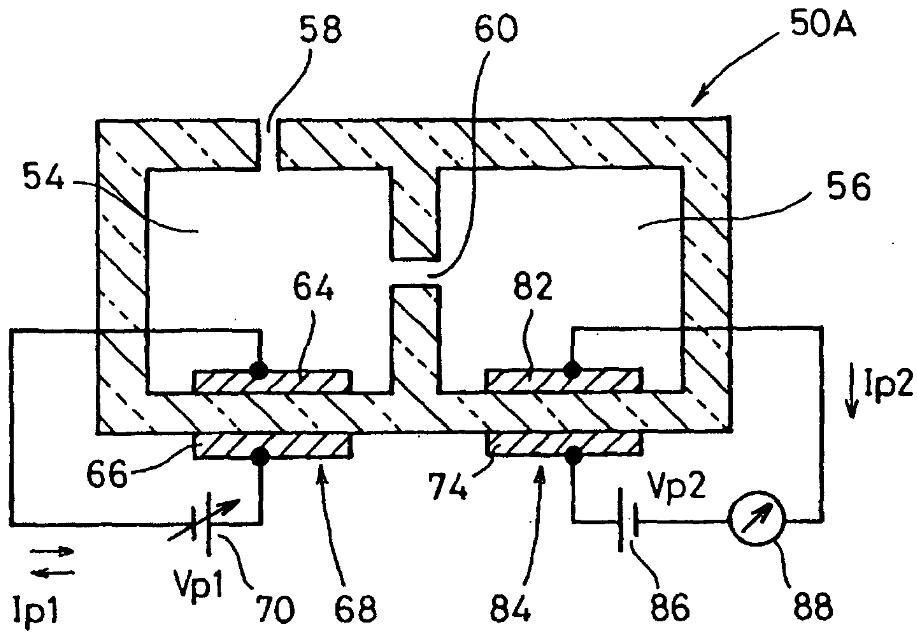
58
60
50A
54
56
64
82
Ip2
66
74
Vp2
Ip1
Vp1
70
68
84
86
88

FIG.4

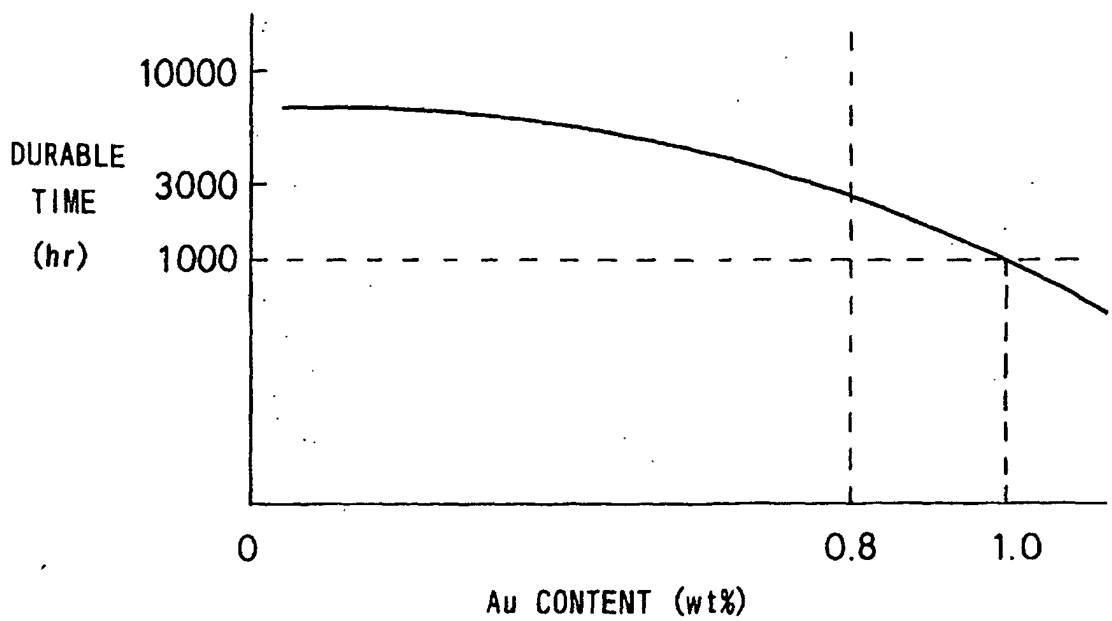
10000
DURABLE TIME (hr)
3000
1000
0
0.8
1.0
Au CONTENT (wt%)

FIG.5

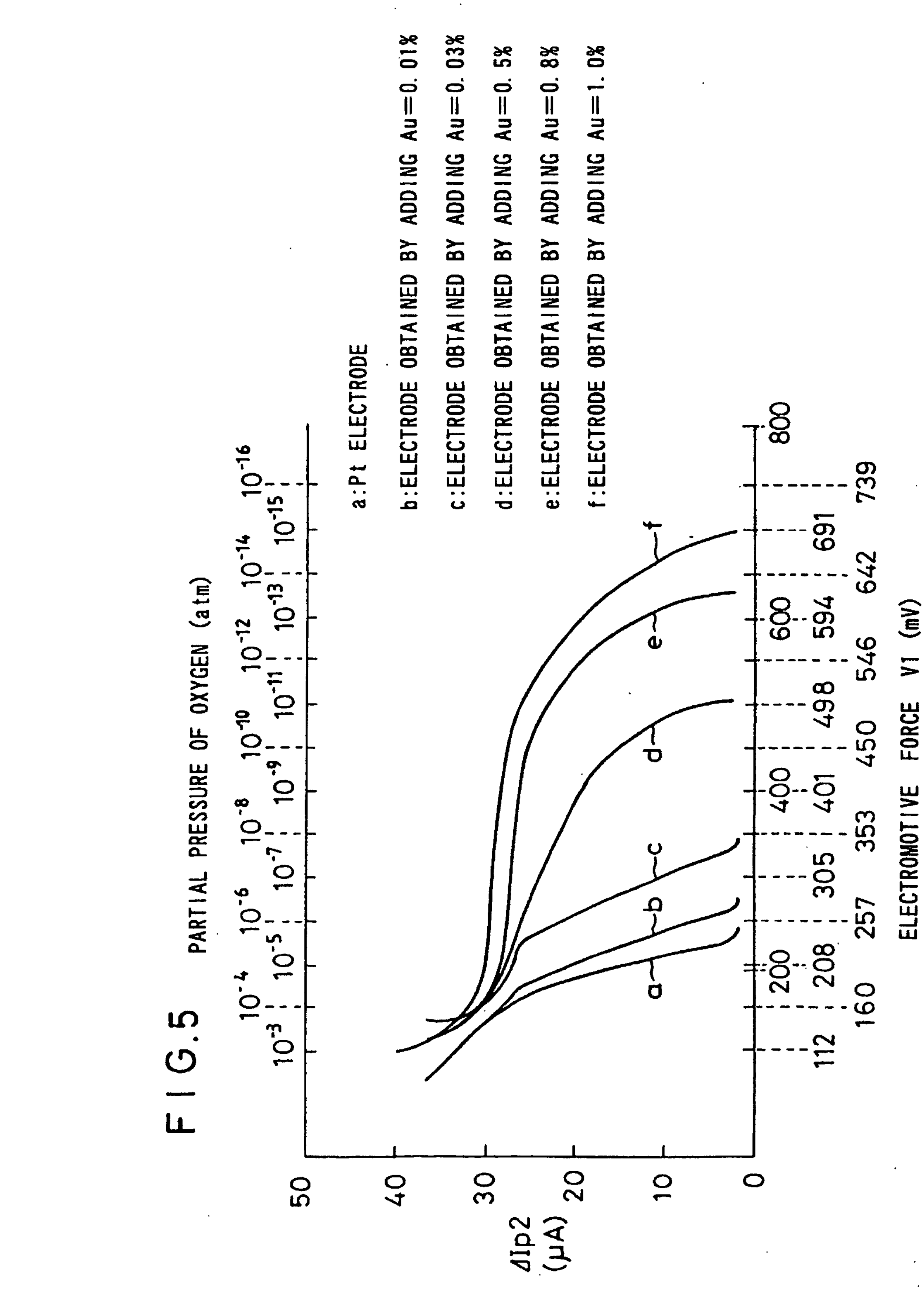
PARTIAL PRESSURE OF OXYGEN (atm)
10^-3 10^-4 10^-5 10^-6 10^-7 10^-8 10^-9 10^-10 10^-11 10^-12 10^-13 10^-14 10^-15 10^-16
ΔIp2 (μA)
50 40 30 20 10 0
112 160 200 208 257 305 353 400 401 450 498 546 600 594 642 691 739 800
ELECTROMOTIVE FORCE V1 (mV)
a b c d e f
a: Pt ELECTRODE
b: ELECTRODE OBTAINED BY ADDING Au=0.01%
c: ELECTRODE OBTAINED BY ADDING Au=0.03%
d: ELECTRODE OBTAINED BY ADDING Au=0.5%
e: ELECTRODE OBTAINED BY ADDING Au=0.8%
f: ELECTRODE OBTAINED BY ADDING Au=1.0%

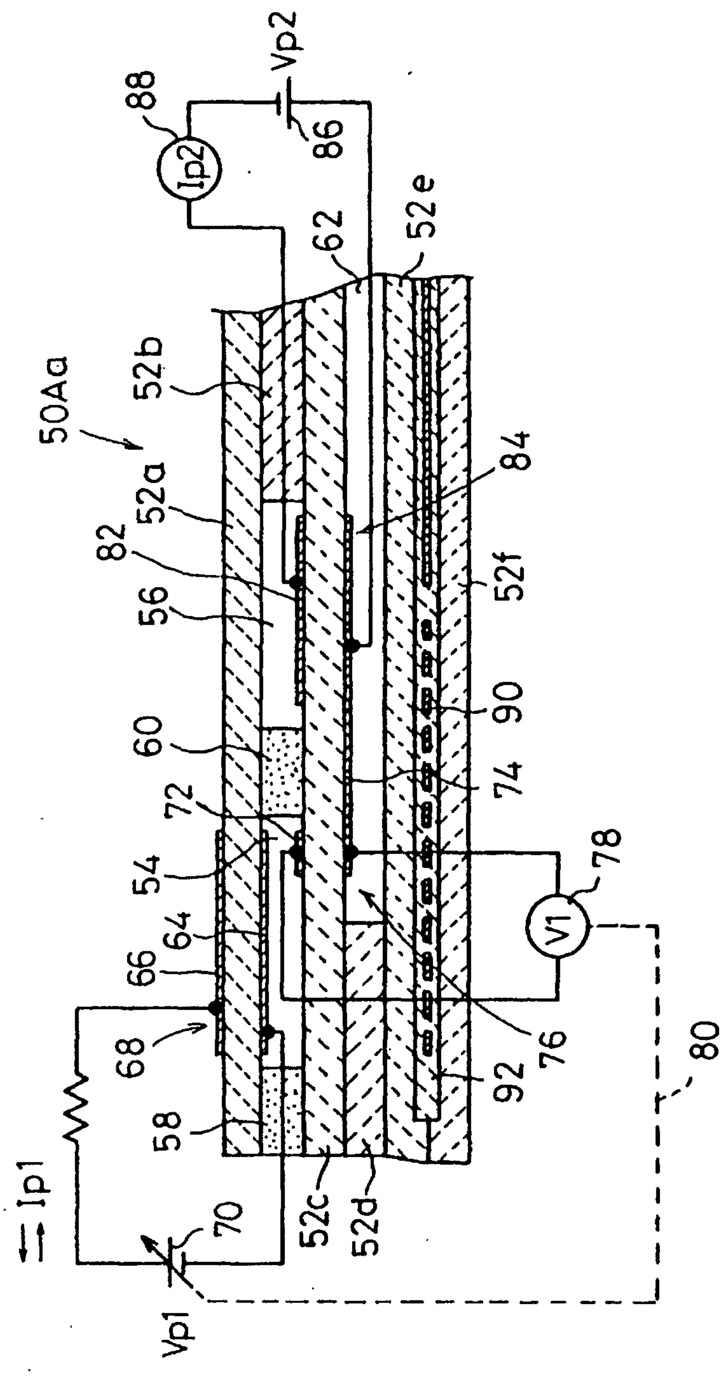

50Aa
52a
52b
52c
52d
52e
52f
54
56
58
60
62
64
66
68
70
72
74
76
78
80
82
84
86
88
90
92
Ip1
Ip2
Vp1
Vp2
V1


FIG.6

FIG.7

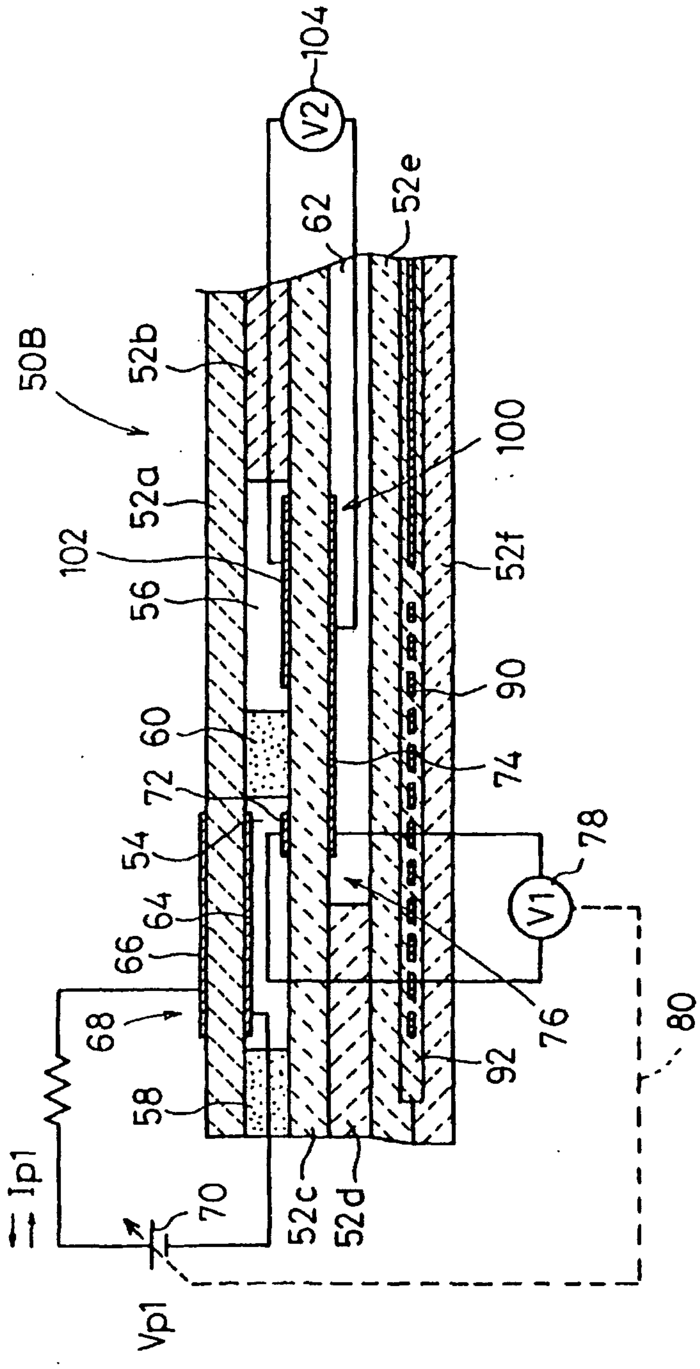
50B
52a
52b
52c
52d
52e
52f
54
56
58
60
62
64
66
68
70
72
74
76
78
80
90
92
100
102
104
V1
V2
Ip1
Vp1

F I G. 8

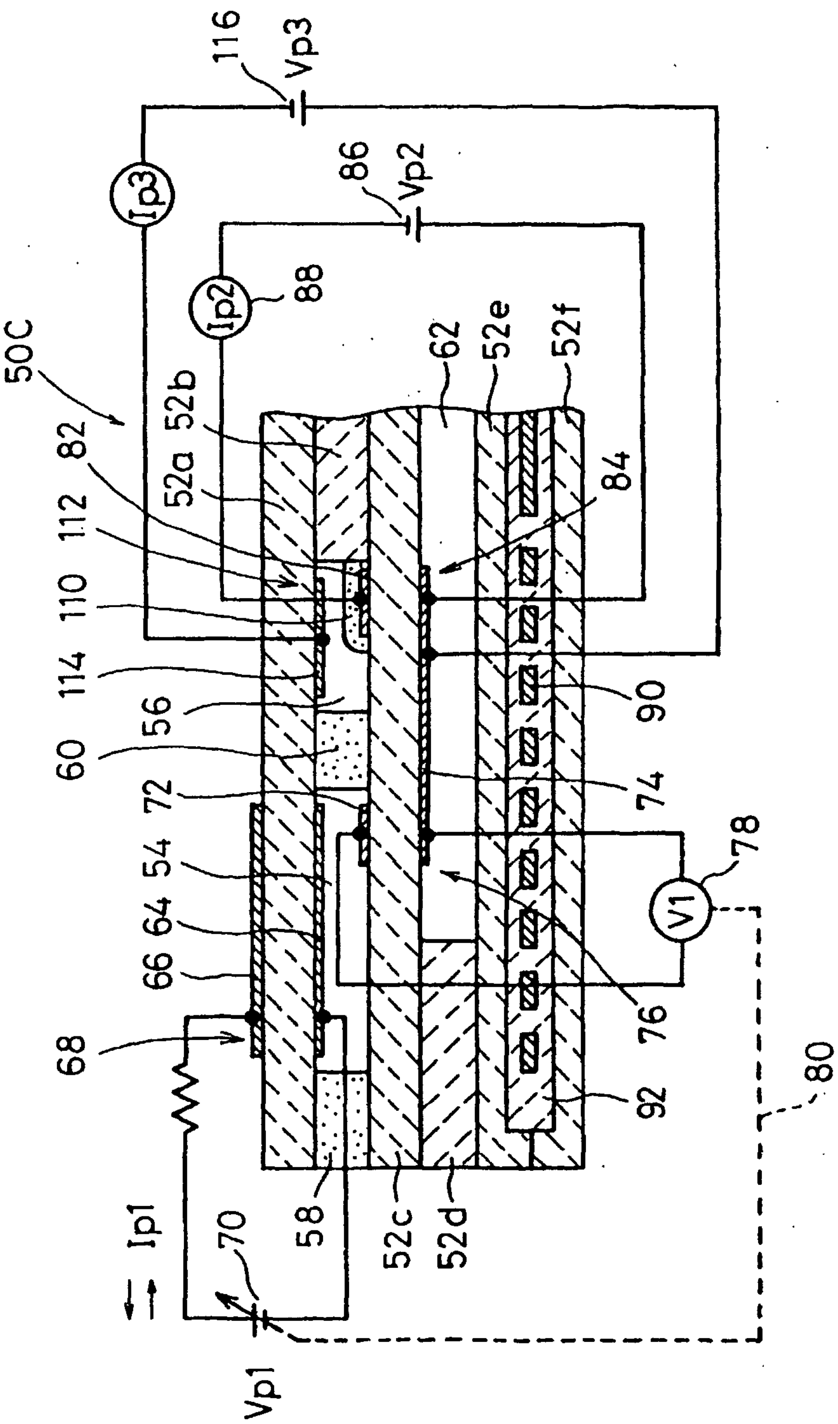
50C
116
Vp3
Ip3
86
Vp2
Ip2
88
62
52e
52f
52a
52b
82
112
110
114
56
60
72
54
64
66
68
84
90
74
78
V1
76
80
92
58
52c
52d
Ip1
70
Vp1

FIG.9

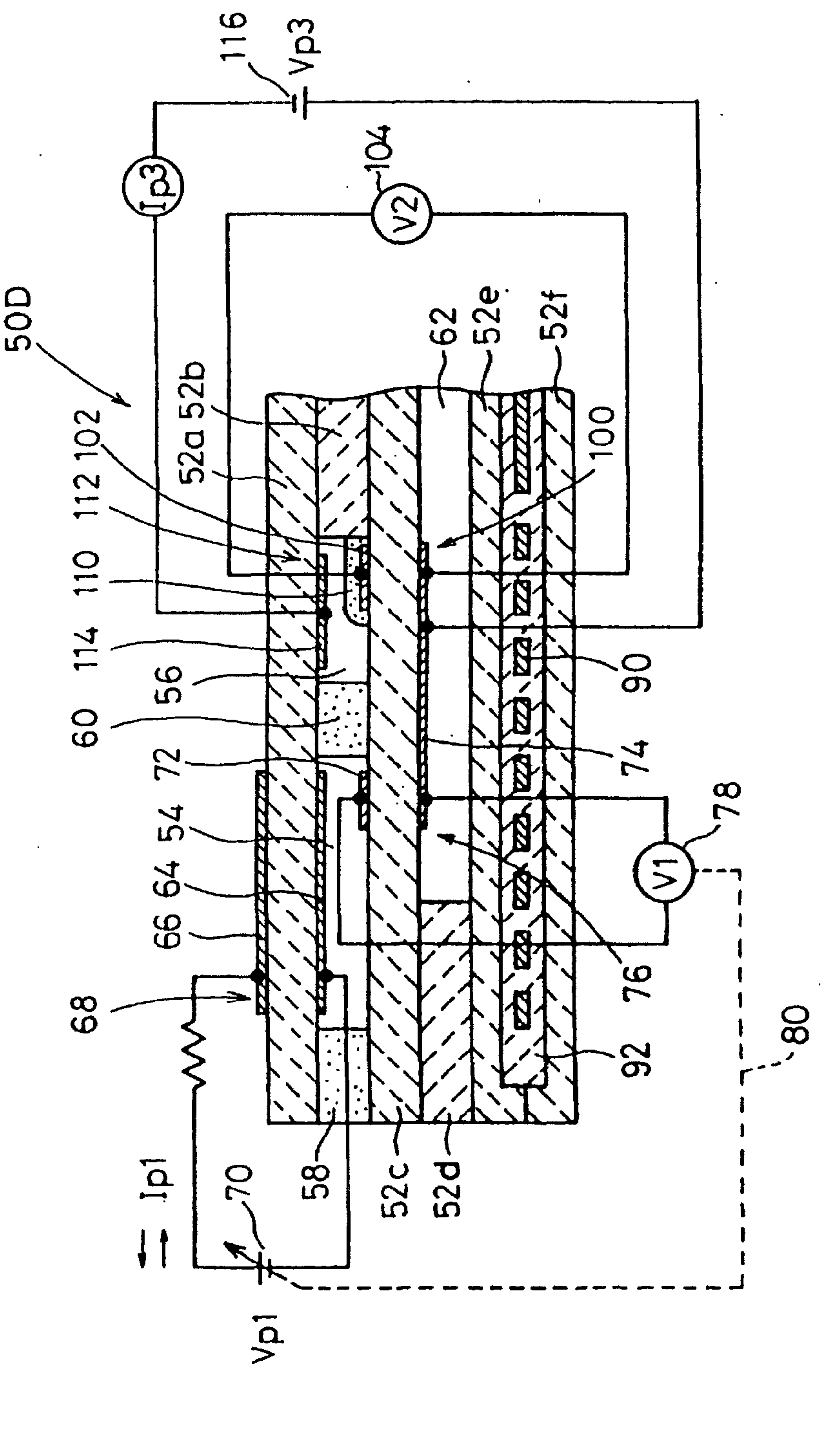
50D
116
Vp3
Ip3
V2
104
52a
52b
102
112
110
114
56
60
72
54
64
66
68
62
52e
52f
100
90
74
78
V1
76
80
92
Ip1
70
58
52c
52d
Vp1

FIG.10

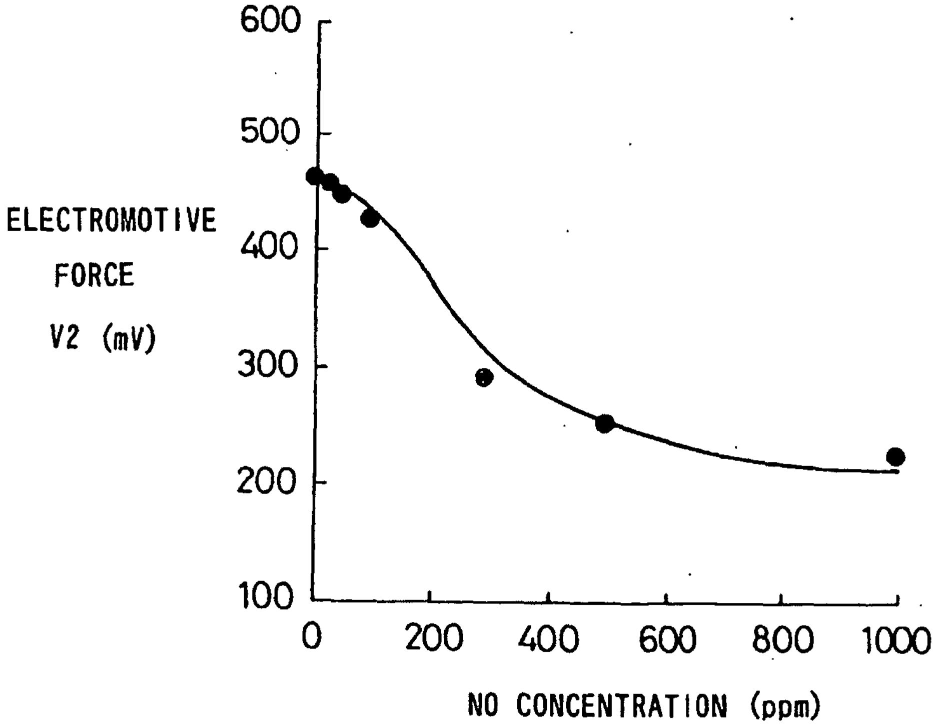
600
500
400
300
200
100
ELECTROMOTIVE
FORCE
V2 (mV)
0
200
400
600
800
1000
NO CONCENTRATION (ppm)

FIG.11

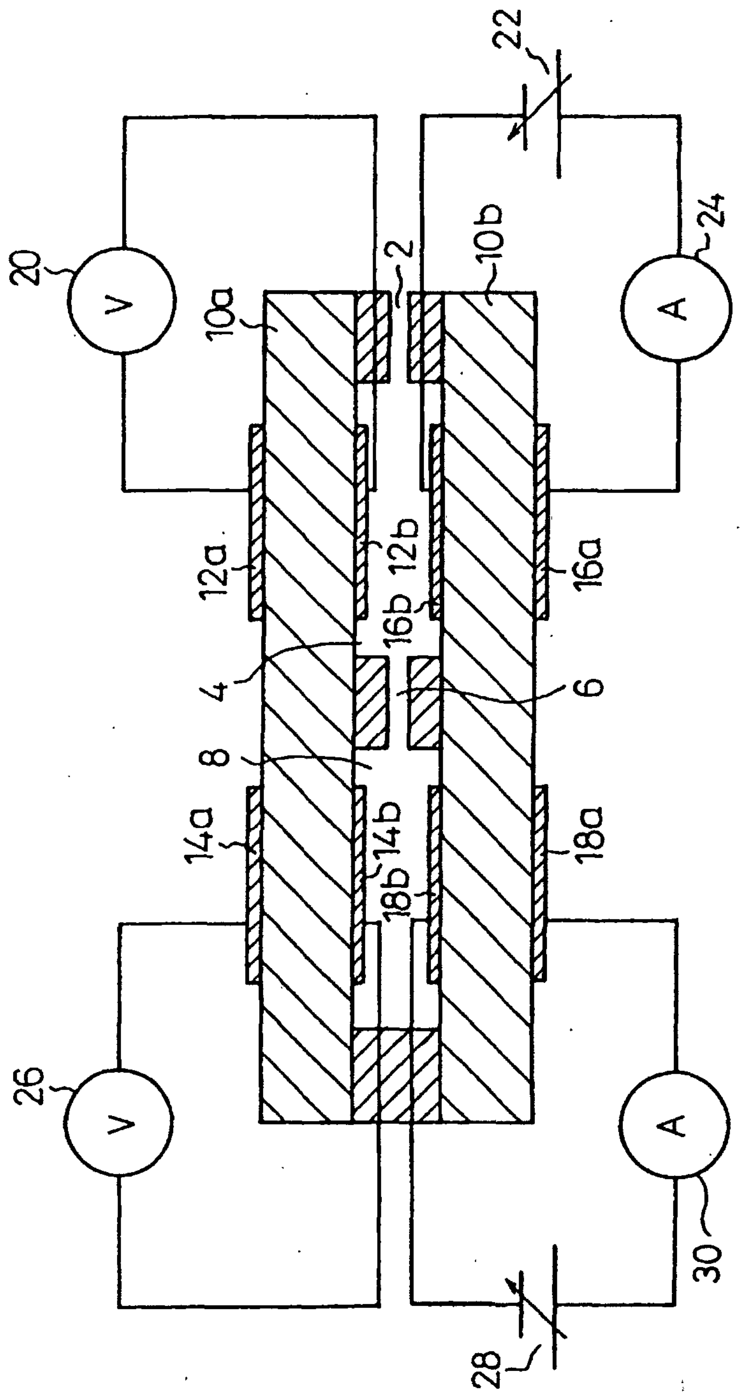
20
V
10a
2
10b
22
24
A
12a
12b
16b
16a
4
6
8
14a
14b
18b
18a
26
V
A
30
28